# EUROPEAN PATENT APPLICATION

(11) **EP 4 796 457 A1**
(43) Date of publication of application: **26.08.2026**
(21) Application number: 24881823.9
(22) Date of filing: 24.12.2024
(51) Int. Cl.: B65D 90/00, H01M 50/20, H01M 50/204

(54) **ENERGY STORAGE DEVICE, ENERGY STORAGE SYSTEM AND CHARGING NETWORK**

(30) Priority: 24.10.2023 CN 202322858858 U; 08.04.2024 WO PCT/CN2024/086600; 08.04.2024 WO PCT/CN2024/086624; 09.07.2024 WO PCT/CN2024/104413; 09.07.2024 WO PCT/CN2024/104575; 19.07.2024 WO PCT/CN2024/106588; 12.08.2024 WO PCT/CN2024/111558; 15.08.2024 CN 202421984591 U; 15.08.2024 WO PCT/CN2024/112387; 15.08.2024 WO PCT/CN2024/112473; 15.08.2024 WO PCT/CN2024/112498; 15.08.2024 WO PCT/CN2024/112558; 24.10.2024 WO PCT/CN2024/127187
(71) Applicant: Contemporary Amperex Technology Co., Limited, Ningde, Fujian 352100 (CN)
(72) Inventor: ZHANG, Mingliang, Ningde, Fujian 352100 (CN); SU, Haibin, Ningde, Fujian 352100 (CN); PENG, Haoran, Ningde, Fujian 352100 (CN); LI, Zhonghong, Ningde, Fujian 352100 (CN)
(74) Representative: Gong, Jinping
(86) International application number: PCT/CN2024/141971
(87) International publication number: WO 2025/087464

(57) **Abstract**

An energy storage device, an energy storage system and a charging network. The energy storage device comprises a control module (30), a plurality of compartment bodies (10) and a plurality of energy units (2), wherein the plurality of compartment bodies are arranged in a height direction of the energy storage device, and an energy unit is accommodated in each of the plurality of compartment bodies; the control module is used for performing electrical control on the energy units in the plurality of compartment bodies; and the dimension in the height direction of at least one of the plurality of compartment bodies is different from the dimensions in the height direction of the other compartment bodies.

## Description

The present disclosure is presented based on Application No. PCT/CN2024/112473, filed on August 15, 2024; Application No. PCT/CN2024/112498, filed on August 15, 2024; Application No. PCT/CN2024/111558, filed on August 12, 2024; Application No. PCT/CN2024/112387, filed on August 15, 2024; Application No. 202421984591.6, filed on August 15, 2024; Application No. PCT/CN2024/112558, filed on August 15, 2024; Application No. PCT/CN2024/106588, filed on July 19, 2024; Application No. PCT/CN2024/104575, filed on July 9, 2024; Application No. PCT/CN2024/086624, filed on April 8, 2024; Application No. PCT/CN2024/104413, filed on July 9, 2024; Application No. 202322858858.9, filed on October 24, 2023; Application No. PCT/CN2024/086600, filed on April 8, 2024; and Application No. PCT/CN2024/127187, filed on October 24, 2024, and claims the priority to the above Patent Applications, the contents of which are incorporated herein by reference in their entireties.

### TECHNICAL FIELD

The present disclosure relates to the technical field of batteries, and in particular, to an energy storage apparatus, an energy storage system, and a charging network.

### BACKGROUND

With the rapid development of technology, electric energy has become an indispensable energy source in people's production and life. To improve the smoothness of electric energy supply and ensure the normal operation of production and life, energy storage apparatuses are needed. Energy storage apparatuses function as apparatuses for cyclically storing and releasing electric energy. By charging or discharging the energy storage apparatuses, electric energy is stored in the energy storage apparatuses, or the electric energy stored in the energy storage apparatuses is supplied to electric apparatuses. Energy storage apparatuses are widely applied to industrial power supply, household power supply, temporary power supply, mobile power supply, wind power generation, solar power generation, energy storage power stations, and the like.

In the development of energy storage apparatuses, in addition to improving their performance, how to reduce their usage cost is also an issue that cannot be ignored. Therefore, how to reduce the usage cost of energy storage apparatuses is a technical issue that requires continuous improvement in energy storage technology.

### SUMMARY

In view of this, embodiments of the present disclosure are intended to provide an energy storage apparatus, an energy storage system, and a charging network, which can reduce the usage cost of the energy storage apparatus.

In order to achieve the above objective, a first aspect of the embodiments of the present disclosure provides an energy storage apparatus. The energy storage apparatus includes:
a plurality of energy units;
a plurality of compartment bodies, the plurality of compartment bodies being arranged in a height direction of the energy storage apparatus, and the plurality of compartment bodies each accommodating the energy unit; and
a control module, the control module being configured to electrically control the energy units in the plurality of compartment bodies,
where a dimension of at least one compartment body of the plurality of compartment bodies in the height direction is different from dimensions of the other compartment bodies in the height direction.

According to the energy storage apparatus of the embodiments of the present disclosure, by setting the dimension of the at least one compartment body of the plurality of compartment bodies in the height direction to be different from the dimensions of the other compartment bodies in the height direction, it is convenient to improve the flexibility of the capacity of the compartment body and match different requirements. In addition, other components and parts of the energy storage apparatus other than the energy unit can be accommodated in the compartment body with a larger dimension in the height direction. In this way, the energy units accommodated in different compartment bodies can be substantially the same or completely the same, which is conducive to improving the assembly efficiency of the energy unit and reducing the cost. In addition, this helps improve the uniformity of the electric capacity of different compartment bodies, thereby improving the performance of the energy storage apparatus.

In some embodiments, a dimension of each of the compartment bodies in the height direction is greater than or equal to one third of a dimension of a standard container in the height direction, and is less than the dimension of one standard container in the height direction.

The dimension of the compartment body cannot be infinitely small. When the dimension of the compartment body in the height direction is greater than or equal to one third of the dimension of the standard container in the height direction, the energy storage apparatus exhibits high manufacturability and high volumetric energy density, and is more convenient for transportation and mounting.

In some embodiments, a dimension of each of the compartment bodies in the height direction is greater than or equal to one half of a dimension of a standard container in the height direction, and is less than the dimension of one standard container in the height direction.

When the dimension of the compartment body in the height direction is greater than or equal to one half of the dimension of the standard container in the height direction, the energy storage apparatus exhibits high manufacturability and high volumetric energy density, and is more convenient for transportation and mounting. For example, when the energy storage apparatus includes two stacked compartment bodies, a plurality of energy units are placed in each compartment body, and the dimension of each compartment body in the height direction is greater than or equal to one half of the dimension of the standard container in the height direction, and is less than the dimension of one standard container in the height direction. The height of the two stacked compartment bodies is higher than that of one standard container, but the total weight of each compartment body containing the energy unit and other components is lower. With this arrangement, each compartment body, containing the energy unit and other components, of the energy storage apparatus can be transported individually, and after the compartment bodies are stacked at the usage site, the electric capacity of the energy storage apparatus is higher.

In some embodiments, the dimension of each of the compartment bodies in the height direction is greater than or equal to one third of the dimension of the standard container in the height direction, and is less than one half of the dimension of the standard container in the height direction.

When the dimension of the compartment body in the height direction is greater than or equal to one third of the dimension of the standard container in the height direction, the energy storage apparatus exhibits high manufacturability and high volumetric energy density, and is more convenient for transportation and mounting. For example, when the energy storage apparatus includes three stacked compartment bodies, a plurality of energy units are placed in each compartment body, and the dimension of each compartment body in the height direction is greater than or equal to one third of the dimension of the standard container in the height direction, and is less than one half of the dimension of the standard container in the height direction. The height of the three stacked compartment bodies is higher than that of one standard container, but the total weight of each compartment body containing the energy unit and other components is lower. With this arrangement, each compartment body, containing the energy unit and other components, of the energy storage apparatus can be transported individually, and after the compartment bodies are stacked at the usage site, the electric capacity of the energy storage apparatus is higher.

In some embodiments, a sum of dimensions of the plurality of compartment bodies in the height direction is greater than a sum of dimensions of one or a plurality of standard containers in the height direction.

By reducing the dimension of the compartment body, the total weight of the compartment body and components in the compartment body can be reduced, which helps alleviate the problem of overweight during transportation and reduces the transportation cost of the energy storage apparatus. Thus, the usage cost of the energy storage apparatus is reduced. In addition, the sum of the dimensions of the plurality of compartment bodies in the height direction is set to be greater than the sum of the dimensions of the one or the plurality of standard containers in the height direction. That is, in one aspect, setting the sum of the dimensions of the plurality of compartment bodies in the height direction to be greater than the sum of the dimensions of the one or the plurality of standard containers in the height direction means that the dimension of at least one compartment body in the height direction is made as large as possible, such that the electric capacity of the energy storage apparatus can be increased as much as possible on the premise of meeting the transportation weight. In another aspect, this helps increase the volume and electric capacity of the energy storage apparatus, thereby further reducing the usage cost of the energy storage apparatus.

In some embodiments, m compartment bodies are provided, a sum of dimensions of m1 compartment bodies of the m compartment bodies in the height direction is less than a sum of dimensions of n standard containers in the height direction, and a sum of dimensions of m1+1 compartment bodies of the m compartment bodies in the height direction is greater than the sum of the dimensions of the n standard containers in the height direction, where m is greater than m1, m is greater than or equal to 2, and m1 is greater than or equal to n.

In this embodiment, the sum of the dimensions of the m1 compartment bodies in the height direction is set to be less than the sum of the dimensions of the n standard containers in the height direction, and m1 ≥ n. That is, by reducing the dimension of the compartment body, the total weight of the compartment body and components in the compartment body can be reduced, which helps alleviate the problem of overweight during transportation and reduces the transportation cost of the energy storage apparatus. Thus, the usage cost of the energy storage apparatus is reduced. In another aspect, setting the sum of the dimensions of the m1+1 compartment bodies in the height direction to be greater than the sum of the dimensions of the n standard containers in the height direction means that the dimension of at least one compartment body in the height direction is made as large as possible, such that the electric capacity of the energy storage apparatus can be increased as much as possible on the premise of meeting the transportation weight. In another aspect, this helps increase the volume and electric capacity of the energy storage apparatus, thereby further reducing the usage cost of the energy storage apparatus.

In some embodiments, m1 = 1, and n = 1; or m1 = 2, and n = 1; or m1 = 2, and n = 2.

In some embodiments, a height dimension of the compartment body is h, where 850mm ≤ h < 2896mm.

In this embodiment, the height dimension of the compartment body is set to 850 mm ≤ h < 2896 mm, which helps reduce the total weight of the compartment body and components in the compartment body, increases the volume and electric capacity of the energy storage apparatus as much as possible, and reduces the usage cost of the energy storage apparatus.

In some embodiments, 1300mm ≤ h ≤ 2400mm.

This helps reduce the total weight of the compartment body and components in the compartment body, increases the volume and electric capacity of the energy storage apparatus as much as possible, and further reduces the usage cost of the energy storage apparatus.

In some embodiments, a dimension of each of the compartment bodies in a length direction thereof is consistent with a dimension of the standard container in a length direction thereof, and a dimension of each of the compartment bodies in a width direction thereof is consistent with a dimension of the standard container in a width direction thereof.

In this embodiment, the dimension of each compartment body in the length direction thereof is set to be consistent with the dimension of the standard container in the length direction thereof, and the dimension of each compartment body in the width direction thereof is set to be consistent with the dimension of the standard container in the width direction thereof. This helps match the transportation vehicles and lifting equipment of existing standard containers and reduces the transportation cost of the energy storage apparatus, thereby reducing the usage cost of the energy storage apparatus.

In some embodiments, except for a topmost compartment body, heights of the other compartment bodies are the same.

In this embodiment, except for the topmost compartment body, the heights of the other compartment bodies are set to be the same. That is, except for the topmost compartment body, the other compartment bodies can adopt the same compartment body, which helps improve the versatility of the compartment body, thereby reducing the cost.

In some embodiments, the energy storage apparatus includes a thermal management module, m compartment bodies are provided, and the thermal management module is configured to manage temperatures of a plurality of energy units of the m compartment bodies.

In this embodiment, the thermal management module is provided, such that the thermal management module can manage the temperature of the energy unit, thereby reducing the risk of temperature runaway of the energy unit.

In addition, the energy storage apparatus shares the thermal management module to form a complete system, thereby helping save space.

In some embodiments, m compartment bodies are provided, the m compartment bodies each accommodate a plurality of energy units, and the control module is configured to electrically control the plurality of energy units of the m compartment bodies.

That is, the energy storage apparatus shares the control module to form a complete system, thereby helping save space.

In some embodiments, the plurality of compartment bodies includes one first compartment body and at least one second compartment body, the first compartment body is located above the second compartment body, and the thermal management module is located in the first compartment body.

In this embodiment, the thermal management module is disposed in the topmost first compartment body, and there is no shield above the thermal management module, which facilitates the heat dissipation of the thermal management module, thereby prolonging the service life of the energy storage apparatus. Meanwhile, it helps reduce the overall center of gravity height of a single compartment body, which is beneficial to transportation safety. In addition, the separation design from an energy compartment helps improve the heat preservation effect of the energy compartment. Meanwhile, the thermal management module shields the heat radiation at the top, thereby reducing the impact of the heat radiation on the inside of the energy compartment.

In some embodiments, a height of the first compartment body is greater than a height of the second compartment body.

In this way, it helps increase the space in the compartment body accommodating the thermal management module, thereby reducing the impact of the thermal management module on the accommodating volume of the energy unit, that is, enabling the compartment body to have sufficient space to accommodate the energy unit and the thermal management module. In addition, the thermal management module with a higher cooling capacity can be placed to improve the thermal management capacity.

In some embodiments, the thermal management module includes a fan and a condenser, the fan and the condenser are located at a top of the first compartment body, a vent is formed in a top wall and/or a side wall of the first compartment body, and the vent is configured for ventilation of the thermal management module.

In this embodiment, the vent is formed in the top wall and/or the side wall of the first compartment body, which facilitates the heat dissipation of the thermal management module, such that the thermal management module can have more heat dissipation channels, thereby improving the temperature control effect of the thermal management module.

In some embodiments, the plurality of compartment bodies include one first compartment body and at least one second compartment body, and the first compartment body is located above the second compartment body; the control module includes a general control module, and the general control module is located in the second compartment body.

Here, the general control module is located in the second compartment body to facilitate maintenance. In addition, one general control module cooperates with two master control modules, which helps save space and reduce the cost.

In some embodiments, the control module includes two master control modules, the two master control modules are located in the first compartment body and the second compartment body, respectively, the two master control modules are configured to control input or output of electric energy of the energy units in the first compartment body and the second compartment body, respectively, and the two master control modules are both electrically connected to the general control module.

Here, both the first compartment body and the second compartment body are provided with the master control module, which facilitates the connection between the master control module and the energy units in the first compartment body and the second compartment body.

In some embodiments, the control module includes a fire protection control module, and the fire protection control module is located in the first compartment body or the second compartment body and configured for fire protection of the energy units in the first compartment body and the second compartment body.

Fire protection is performed on the first compartment body and the second compartment body via one fire protection control module, which helps save space and reduce the cost.

In some embodiments, the energy storage apparatus includes a power conversion system, the power conversion system is accommodated in the first compartment body or the second compartment body, and the power conversion system is electrically connected to the energy units in the plurality of compartment bodies.

In order to facilitate the rapid mounting on site by the customer, at least part of the power conversion systems are accommodated in the first compartment body or the second compartment body, such that the connection to the PCS can be completed after the compartment bodies are stacked on site, which helps reduce the workload of on-site assembly and improves the assembly efficiency, thereby facilitating the use by the customer.

In some embodiments, at least part of the compartment bodies include a first connector, the first connector being electrically connected to the control module; each of the compartment bodies includes a second connector, the second connector being electrically connected to the plurality of energy units, where the first connector is configured to cooperate with each of the second connectors.

In this embodiment, the cooperation between the first connector and each second connector can enable a quick connection between the control module and the energy unit, such that the connection between the control module and the energy unit is more convenient.

In some embodiments, the energy storage apparatus includes a plurality of battery apparatuses, each of the battery apparatuses includes a thermal management component and a plurality of energy units, and the thermal management component is configured to adjust a temperature of the energy unit;
at least part of the compartment bodies include a third connector, and each of the compartment bodies includes a fourth connector, where the third connector is in communication with the thermal management module, the fourth connector is in communication with the thermal management component, and the third connector is configured to cooperate with each of the fourth connectors.

In this embodiment, the cooperation between the third connector and the fourth connector can enable quick communication between the thermal management component and the thermal management module, thereby facilitating the mounting of the thermal management module.

In some embodiments, the thermal management module is in communication with a plurality of thermal management components via a liquid cooling pipeline, the liquid cooling pipeline includes a main pipeline and a plurality of branch pipelines, the plurality of branch pipelines are connected in parallel to the main pipeline, the main pipeline is in communication with the thermal management module, and the plurality of branch pipelines are in communication with the plurality of thermal management components, respectively; the main pipeline is located above the plurality of battery apparatuses, or the main pipeline is located below the plurality of battery apparatuses.

Here, the main pipeline is disposed above the plurality of battery apparatuses, or disposed below the plurality of battery apparatuses, which helps shorten the liquid cooling pipeline, thereby helping reduce the cost and improve cooling efficiency.

In some embodiments, the energy unit is a battery cell, and a weight of a single energy unit is 5 kg to 60 kg.

The weight of the energy unit is appropriate, such that an appropriate number of the energy units can be placed in the compartment body, and the energy density is moderate in the case of meeting transportation requirements.

In some embodiments, the energy storage apparatus includes an energy storage compartment, the energy storage compartment includes one compartment body and a component disposed in the compartment body, and a weight of the energy storage compartment is M, M being less than or equal to 35 tons.

In order to enable a single energy storage compartment to meet the requirements of some countries for transportation limits, the overall medium weight of the energy storage compartment is controlled to be within 35 tons, and the integration degree of the energy storage compartment is as high as possible, reducing the workload of on-site mounting. In addition, the energy per unit area is increased to reduce the cost input of the customer.

In some embodiments, the energy storage apparatus includes an energy storage compartment, the energy storage compartment includes one compartment body and a component disposed in the compartment body, a weight of the energy storage compartment is M, and a total weight of the energy units in the compartment body is M1, where (M1/M) × 100% ≥ 60%.

In this way, in one aspect, the weight proportion of the energy units per unit volume of the compartment body can be increased, and the electric capacity per unit volume of the energy storage apparatus can be increased. In another aspect, during transportation of the energy storage apparatus, the primary components transported are the energy units that contribute to the energy storage capacity and cannot be produced at the destination due to high production difficulty, while other structures can be produced at a place close to the destination to eliminate or reduce the need for transportation, which helps reduce the transportation cost of the assembled energy storage apparatus after the compartment bodies are assembled into the energy storage apparatus.

In some embodiments, (M1/M) × 100% ≥ 80%.

In this way, this further helps reduce the transportation cost of the assembled energy storage apparatus.

In some embodiments, the energy storage apparatus includes an energy storage compartment, the energy storage compartment includes one compartment body and a component disposed in the compartment body, a weight of the energy storage compartment is M, the compartment body is provided with a plurality of battery apparatuses therein, the battery apparatus includes a case and a plurality of energy units, the plurality of energy units are accommodated in the case, and a total weight of the battery apparatuses is M2, where 70% ≤ (M2/M) × 100% ≤ 90%.

Both the energy density of the energy storage compartment and the structural strength of the compartment body can be considered, and the compartment body is more practical.

In some embodiments, a volume of the compartment body is V, and a total volume of the energy units in the compartment body is V1, where (V1/V) × 100% ≥ 30%.

In one aspect, the volume proportion of the energy units per unit volume of the compartment body can be increased, and the electric capacity per unit volume of the energy storage apparatus can be increased. In another aspect, during transportation of the energy storage apparatus, the primary components transported are the energy units that contribute to the energy storage capacity and cannot be produced at the destination due to high production difficulty, while other functional elements of the energy storage apparatus, such as a control element, can be produced at a place close to the destination to eliminate or reduce the need for transportation, which helps reduce the transportation cost of the assembled energy storage apparatus after the compartment bodies are assembled into the energy storage apparatus.

In some embodiments, (V1/V) × 100% ≥ 50%.

This further helps reduce the transportation cost of the assembled energy storage apparatus.

In some embodiments, a volume of the compartment body is V, the compartment body is provided with a plurality of battery apparatuses, the battery apparatus includes a case and a plurality of energy units, the plurality of energy units are accommodated in the case, and a total volume of the battery apparatuses is V2, where 50% ≤ (V2/V) × 100% ≤ 80%.

Both the energy density of the energy storage apparatus and the structural strength of the compartment body can be considered, and the compartment body is more practical.

In some embodiments, the energy storage apparatus includes an energy storage compartment, the energy storage compartment includes one compartment body and a component disposed in the compartment body, energy of the energy storage compartment is E, a dimension of the compartment body in a length direction of the compartment body is a, and a dimension of the compartment body in a width direction of the compartment body is b, where 250 KW/*m*² ≤ E/(a × b) ≤ 700 KW/*m*².

Both the energy density of the energy storage apparatus 100 and the mass setting of the compartment body 10 are considered, the practicability of the energy storage apparatus 100 is improved, and the transportation of the energy storage apparatus 100 is facilitated.

In some embodiments, 450 KW/*m*² ≤ E/(a × b) ≤ 600 KW/*m*².

This can further improve the energy density of the energy storage apparatus 100 and the mass setting of the compartment body 10, and facilitate the transportation of the energy storage apparatus 100.

In some embodiments, in a height direction of the compartment body, two adjacent compartment bodies are connected by means of welding, snap-fit connection, locking attachment connection, or fixing members.

This helps reduce the risk that the two adjacent compartment bodies move with each other after stacking is completed, thereby helping improve the structural stability of the energy storage apparatus.

In some embodiments, the plurality of compartment bodies include a first compartment body and a second compartment body, the first compartment body is located above the second compartment body, a bottom of the first compartment body is provided with a limiting pin, a top of the second compartment body is provided with a limiting hole, and the limiting pin is snap-fitted to the limiting hole.

The two adjacent compartment bodies are fixed through the snap-fit connection between the limiting pin and the limiting hole, employing a simple structure to limit the relative movement of the two adjacent compartment bodies.

In some embodiments, the bottom of the first compartment body is provided with a first limiting member, the first limiting member is provided with a limiting groove, the top of the second compartment body is provided with a second limiting member, the second limiting member is provided with the limiting hole, and two ends of the limiting pin are snap-fitted to the limiting groove and the limiting hole, respectively.

The two ends of the limiting pin are snap-fitted to the limiting groove and the limiting hole, respectively, to fix the two adjacent compartment bodies, employing a simple structure to limit the relative movement of the two adjacent compartment bodies.

In some embodiments, m compartment bodies are provided, the energy storage apparatus further includes a connection mechanism, and the connection mechanism is configured to be capable of connecting two adjacent compartment bodies in the height direction of the compartment body,
where the connection mechanism includes a support member, and the support member is disposed between the two adjacent compartment bodies in the height direction; a sum of the sum of the dimensions of the m1 compartment bodies of the m compartment bodies in the height direction and a sum of dimensions of m1-1 support members in the height direction is less than the sum of the dimensions of the n standard containers in the height direction, and a sum of the sum of the dimensions of the m1+1 compartment bodies of the m compartment bodies in the height direction and a sum of dimensions of m1 support members in the height direction is greater than the sum of the dimensions of the n standard containers in the height direction.

By connecting the compartment bodies via the connection mechanism, the stacking of the compartment bodies can be more stable. During transportation of the compartment bodies, the sum of the sum of the dimensions of the m1 compartment bodies in the height direction and the sum of the dimensions of the support members disposed between two adjacent compartment bodies of the m1 compartment bodies in the height direction is less than the sum of the heights of the n standard containers, and the sum of the sum of the dimensions of the m1+1 compartment bodies of the m compartment bodies in the height direction and the sum of the dimensions of the m1 support members in the height direction is greater than the sum of the dimensions of the n standard containers in the height direction. This helps increase the volume and energy of the energy storage apparatus, and further reduces the usage cost of the energy storage apparatus.

In some embodiments, the standard container is a 20-foot standard container, and a height of the standard container is 2896 mm, 2591 mm, or 2438 mm.

In some embodiments, an energy compartment and a control compartment are provided inside at least part of the compartment bodies, the energy compartment is configured to accommodate at least one energy unit, and at least part of control modules and/or at least part of thermal management modules are accommodated in the control compartment; a first compartment door is provided on at least one side of the compartment body in the width direction, and a second compartment door is provided on at least one side of the control compartment and/or a pipeline compartment in the width direction.

In this embodiment, it helps reduce the land waste caused by the need to reserve a maintenance channel of more than 3 m between adjacent compartment bodies in the conventional compartment body, and only a normal maintenance channel for paint repair needs to be reserved between the grid-patterned compartment bodies, which increases the user's land investment returns and increases the user's energy returns per unit area.

The embodiments of the present disclosure further provide an energy storage system, including a power conversion apparatus and the above energy storage apparatus. The power conversion apparatus is configured to electrically connect a power generation apparatus to the energy storage apparatus.

The embodiments of the present disclosure further provide a charging network, including a charging pile and the above energy storage apparatus or the above energy storage system. The energy storage apparatus is configured to provide electric energy to the charging pile.

### BRIEF DESCRIPTION OF THE DRAWINGS

FIG. 1 is a schematic structural diagram of a charging network according to some embodiments of the present disclosure;
FIG. 2 is a schematic structural diagram of an energy storage system according to some embodiments of the present disclosure;
FIG. 3 is a schematic structural diagram of an energy storage apparatus according to some embodiments of the present disclosure;
FIG. 4 is a partial schematic structural diagram of the energy storage apparatus of FIG. 3;
FIG. 5 is an arrangement diagram of an energy storage apparatus according to some embodiments of the present disclosure;
FIG. 6 is a schematic structural diagram of an energy storage apparatus according to some embodiments of the present disclosure;
FIG. 7 is a schematic structural diagram of an energy storage apparatus according to some embodiments of the present disclosure;
FIG. 8 is a schematic structural diagram of an energy storage apparatus according to some embodiments of the present disclosure;
FIG. 9 is a schematic structural diagram of an energy storage apparatus according to some embodiments of the present disclosure;
FIG. 10 is a schematic structural diagram of an energy storage apparatus according to some embodiments of the present disclosure;
FIG. 11 is a schematic structural diagram of an energy storage apparatus according to some embodiments of the present disclosure;
FIG. 12 is a schematic structural diagram of an energy storage apparatus according to some embodiments of the present disclosure;
FIG. 13 is a schematic structural diagram of an energy storage apparatus according to some embodiments of the present disclosure;
FIG. 14 is a schematic structural diagram of a control module according to some embodiments of the present disclosure;
FIG. 15 is a schematic structural diagram of cooperation between two adjacent compartment bodies of an energy storage apparatus according to an embodiment of the present disclosure;
FIG. 16 is a schematic structural diagram of an energy storage apparatus according to some embodiments of the present disclosure;
FIG. 17 is a schematic structural diagram of an energy storage apparatus according to some embodiments of the present disclosure;
FIG. 18 is a schematic structural diagram of a battery apparatus according to some embodiments of the present disclosure; and
FIG. 19 is a schematic structural diagram of an energy storage apparatus according to some embodiments of the present disclosure.

### Description of the reference numerals:

1000: charging network; 2000: energy storage system; 100: energy storage apparatus; 100a: energy storage compartment; 10: compartment body; 101: first partition member; 102: second partition member; 103: third partition member; 104: first compartment door; 2: energy unit; 3: first compartment body; 31: first limiting member; 311: limiting groove; 4: second compartment body; 41: second limiting member; 411: limiting hole; 42: limiting pin; 43: support member; 6: first connector; 7: second connector; 8: third connector; 9: fourth connector; 11: energy compartment; 12: control compartment; 13: pipeline compartment; 14: vent; 15: main body portion; 16: mounting portion; 20: thermal management module; 30: control module; 301: master control module; 302: power distribution module; 303: general control module; 304: fire protection control module; 40: heat exchange conduit; 50: connection wire harness; 51: high-voltage wire harness; 52: low-voltage wire harness; 60: protection cover; 70: second compartment door; 80: battery apparatus; 81: case; 811: first case; 812: second case; 82: thermal management component; 90: liquid cooling pipeline; 91: main pipeline; 92: branch pipeline; 200: charging pile; 300: power converting apparatus; 3000: power generation apparatus.

### DETAILED DESCRIPTION

Unless otherwise specified, all embodiments and optional embodiments of the present disclosure may be combined with one another to form new technical solutions.

Unless otherwise specified, all technical features and optional technical features of the present disclosure may be combined with one another to form new technical solutions.

With the development of clean energy, more and more devices are powered by electric energy, which in turn drives the rapid development of power batteries (such as lithium-ion batteries) that can store large amounts of electric energy and undergo multiple charge-discharge cycles. Power batteries are not only applied in energy storage power systems such as hydropower, thermal power, wind power, and solar power stations, but are also widely applied in electric transportation vehicles such as electric bicycles, electric motorcycles, or electric vehicles, as well as in aerospace and other fields.

In the embodiments of the present disclosure, the energy unit may be a secondary battery. The secondary battery refers to an energy unit that can continue to be used by activating an active material through charging after the energy unit is discharged.

The energy unit may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present disclosure.

The energy unit generally includes an electrode assembly. Merely by way of example, the electrode assembly includes a positive electrode, a negative electrode, and a separator, and the separator is disposed between the negative electrode and the positive electrode. During the charging and discharging process of the energy unit, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in its own thickness direction, and the positive electrode active material is disposed on either or both of the two opposite surfaces of the positive electrode current collector.

As an example, the positive electrode current collector may be a metal foil, a conductive polymer material, a carbon material, or a composite current collector. For example, for the metal foil, a pure metal, an alloy, or a surfacetreated metal may be used, including but not limited to stainless steel, copper, aluminum, nickel, nickel, titanium, silver, or the like. The composite current collector may include a polymer material base layer and a metal layer. The composite current collector may be fabricated by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present disclosure is not limited to these materials, and other conventional materials that can be used as the positive electrode active material in batteries may also be used.

In some embodiments, the negative electrode may be a negative electrode plate, and the negative electrode plate may include a negative electrode current collector.

As an example, the negative electrode current collector may be a metal foil, a conductive polymer material, a carbon material, or a composite current collector. For example, for the metal foil, a pure metal, an alloy, or a surfacetreated metal may be used, including but not limited to stainless steel, copper, aluminum, nickel, nickel, titanium, silver, or the like. The composite current collector may include a polymer material base layer and a metal layer. The composite current collector may be fabricated by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The present disclosure does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic. The separation film may be a single-layer film or a multi-layer composite film, which is not specified. When the separation film is a multi-layer composite film, the materials of the layers may be the same or different, which is not specified. The separator may be a separate component located between the positive electrode and the negative electrode, or may be attached to the surfaces of the positive electrode and the negative electrode. The surface of the separation film may also be coated with an inorganic particle coating, an organic particle coating, or an organic/inorganic composite coating.

In some embodiments, the separator is a solid-state electrolyte. The solid-state electrolyte is disposed between the positive electrode and the negative electrode, serving both to transport ions and to isolate the positive electrode and the negative electrode.

In some embodiments, the energy unit further includes an electrolyte that serves to conduct ions between the positive electrode and the negative electrode. The present disclosure does not particularly limit the type of the electrolyte, which may be selected according to needs. The electrolyte may be liquid-state, gel-state, or solid-state.

The electrode assembly may be of a wound structure, a stacked structure, or a mixed structure of wound and stacked structures.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, multi-prismatic, or the like.

In some embodiments, the electrode assembly is provided with tabs that can conduct current out from the electrode assembly. The tabs include a positive electrode tab and a negative electrode tab.

In some embodiments, the energy unit may include a shell. The shell may be a steel shell, an aluminum shell, a plastic shell (such as polypropylene), a composite metal shell (such as a copper-aluminum composite shell), an aluminum-plastic film, or the like. In some embodiments, the shell may be of a sealing structure or a non-sealing structure. As an example, when the shell is of a non-sealing structure, the shell serves to protect the electrode assembly, a sealing bag is further included between the shell and the electrode assembly, and the sealing bag is configured to encapsulate the electrode assembly and the electrolyte. Specifically, the sealing bag may be a bag-shaped insulating member or aluminum-plastic film. When the shell is of a sealing structure, the shell is configured to encapsulate components such as the electrode assembly and the electrolyte.

As an example, the energy unit may be a cylindrical energy unit, a prismatic energy unit, a pouch energy unit, or an energy unit of other shapes. The prismatic energy unit includes a square-shell energy unit, a blade-shaped energy unit, and a polygonal prismatic battery, and the polygonal prismatic battery is, for example, a hexagonal prismatic battery. This is not particularly limited in the present disclosure.

In some embodiments, the shell includes an end cover and a shell body. The shell body is provided with an opening, and the opening is lidded with the end cover. The shell body may be provided with one or more openings. There may also be one or more end covers.

In some embodiments, at least one electrode terminal is disposed on the shell, and the electrode terminal is electrically connected to the tabs. The electrode terminal may be directly connected to the tabs or may be indirectly connected to the tabs via a current collecting member. The electrode terminal may be disposed on the end cover, or may also be disposed on the shell body.

In some embodiments, the energy storage apparatus includes an energy storage container and the like.

The power station has an increasingly high requirement for the area energy density of the energy storage apparatus. Therefore, to increase the electric capacity, the total weight of the compartment body and components in the compartment body is also correspondingly increased. However, the energy storage apparatus needs to be transported from a production site to a usage site by land transportation and/or sea transportation. Since there is typically a transportation weight limit in the land transportation and the sea transportation, a contradiction between an increase in energy density and the weight of the energy storage apparatus arises.

In view of this, the embodiments of the present disclosure provide a new technical solution, and the technical solution described in the embodiments of the present disclosure is applicable to an energy storage apparatus, an energy storage system including the energy storage apparatus, and a charging network.

The energy storage apparatus may be used in an energy storage power station, a wind power generation system, a solar power system, a mobile power system, or a temporary power supply system. The energy storage apparatus can store electric energy as needed and output the electric energy when appropriate. For example, the energy storage apparatus can store electric energy during periods of low power demand and provide the electric energy to relevant users or electric devices during periods of high power demand. The energy storage system provided in the embodiments of the present disclosure may be any power system that requires an energy storage apparatus.

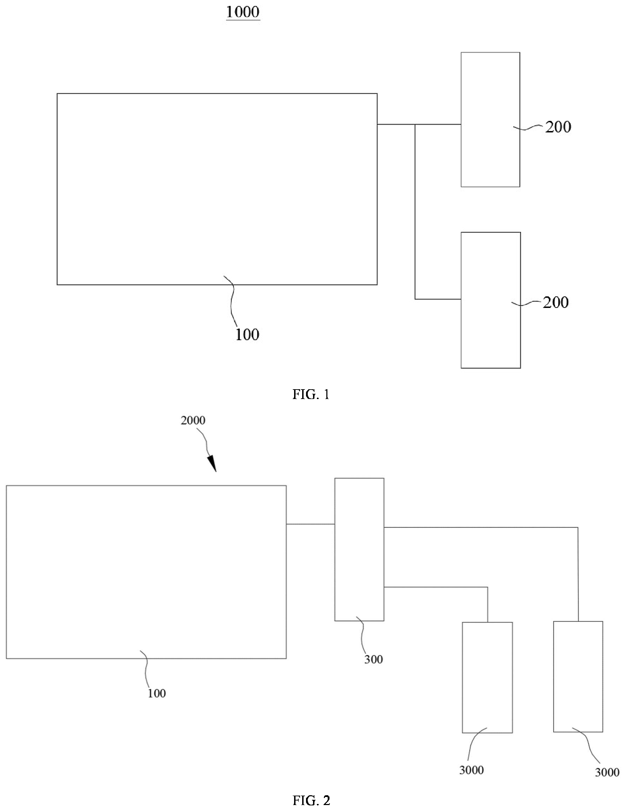

Referring to FIG. 1, FIG. 1 is a schematic structural diagram of a charging network 1000 according to an embodiment of the present disclosure. The embodiments of the present disclosure provide a charging network 1000. The charging network 1000 includes a charging pile 200, and the charging pile 200 is configured to charge an electric device. The charging network 1000 may further include an energy storage apparatus 100 or an energy storage system 2000. The energy storage apparatus 100 is electrically connected to the charging pile 200, and the energy storage apparatus 100 is configured to provide electric energy to the charging pile 200.

It should be noted that the charging pile 200 is electrically connected to an energy unit 2 in the energy storage apparatus 100 via a cable, and the energy unit 2 can provide the electric energy stored therein to the charging pile 200. The charging pile 200 is provided with one or more connectors for connecting an electric device (such as a vehicle) so as to supply the electric device with power. The energy storage apparatus 100 is applied to the charging network 1000, such that the reliability of the charging network 1000 can be effectively improved, and the flexibility of the charging network 1000 during deployment can be further improved.

The energy storage apparatus 100 may be located inside the charging pile 200 (for example, an integral storage and charging device) or outside the charging pile 200.

In one charging network 1000, one charging pile 200 may be provided, and the energy storage apparatus 100 provides electric energy to the one charging pile 200; a plurality of charging piles 200 may also be provided, and the energy storage apparatus 100 provides electric energy to the plurality of charging piles 200.

The energy storage apparatus 100 may include a plurality of compartment bodies 10 and a plurality of energy units 2. The plurality of energy units 2 are accommodated in at least one compartment body 10, and the energy unit 2 is electrically connected to the charging pile 200, such that the energy unit 2 provides electric energy to the charging pile 200.

As an example, as shown in FIG. 1, the charging network 1000 includes one energy storage apparatus 100 and two charging piles 200, and the one energy storage apparatus 100 provides electric energy to the two charging piles 200.

Referring to FIG. 2, FIG. 2 is a schematic structural diagram of an energy storage system 2000 according to an embodiment of the present disclosure. The embodiments of the present disclosure provide an energy storage system 2000. The energy storage system 2000 includes a power converting apparatus 300. The power converting apparatus 300 may be electrically connected to a power generation apparatus 3000 and an energy storage apparatus 100, so as to convert electric power provided by the power generation apparatus 3000. The power converting apparatus 300 performs power conversion on the electric energy provided by the power generation apparatus 3000, and then introduces the electric energy into the energy storage apparatus 100 for storage.

The power conversion apparatus is configured to be connected between the power generation apparatus 3000 and the energy storage apparatus 100. The power generation apparatus 3000 is configured to generate electric energy, and the power generation apparatus 3000 is configured to store the generated electric energy into the energy storage apparatus 100 via the power conversion apparatus. The energy storage apparatus 100 is applied to the energy storage system 2000, such that the operation reliability of the energy storage system 2000 can be effectively improved. During specific implementation, the power generation device may be specifically a solar panel, a hydroelectric device, a fire power generation device, or the like. The specific type of the power generation device is not limited in the present disclosure.

As an example, as shown in FIG. 2, the energy storage system 2000 includes an energy storage apparatus 100 and a power converting apparatus 300. Two power generation apparatuses 3000 separately transmit the generated electric energy to the power converting apparatus 300, and the electric energy is introduced into the energy storage apparatus 100 via the power converting apparatus 300 for storage.

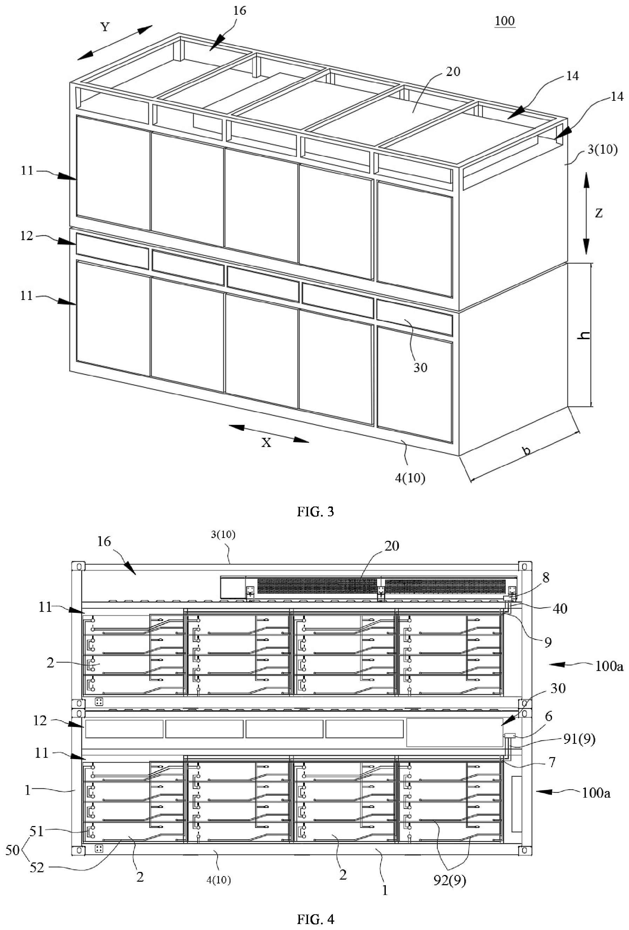

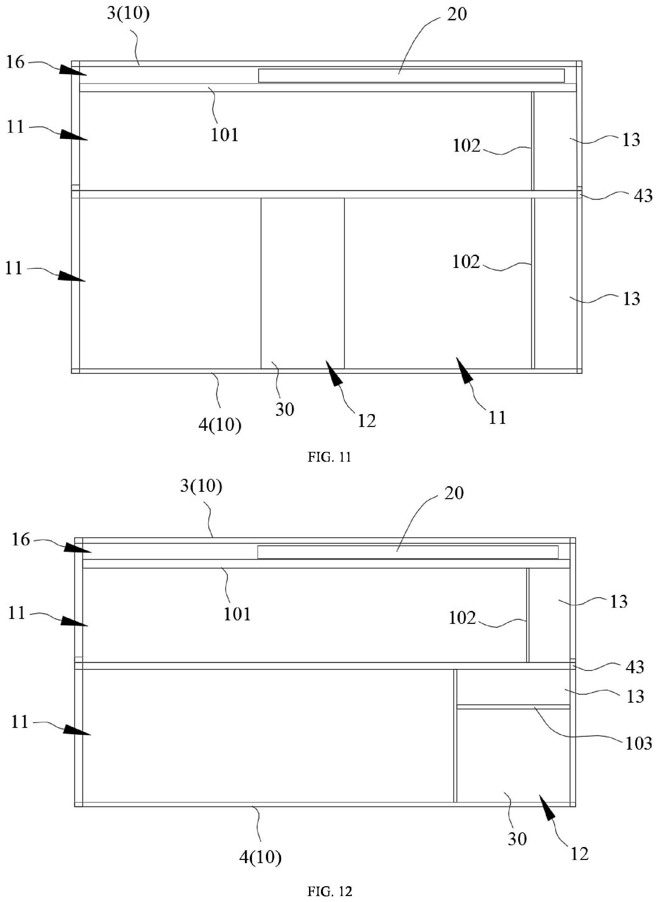

Referring to FIGs. 3 to 13, some embodiments of the present disclosure provide an energy storage apparatus 100. The energy storage apparatus 100 includes a plurality of compartment bodies 10, and the plurality of compartment bodies 10 are arranged in the height direction of the energy storage apparatus 100.

The compartment body 10 may be a cabinet body or a container. A cavity is formed inside the compartment body 10, and the cavity may accommodate other components of the energy storage apparatus 100. The compartment body 10 may be of a hexahedral structure.

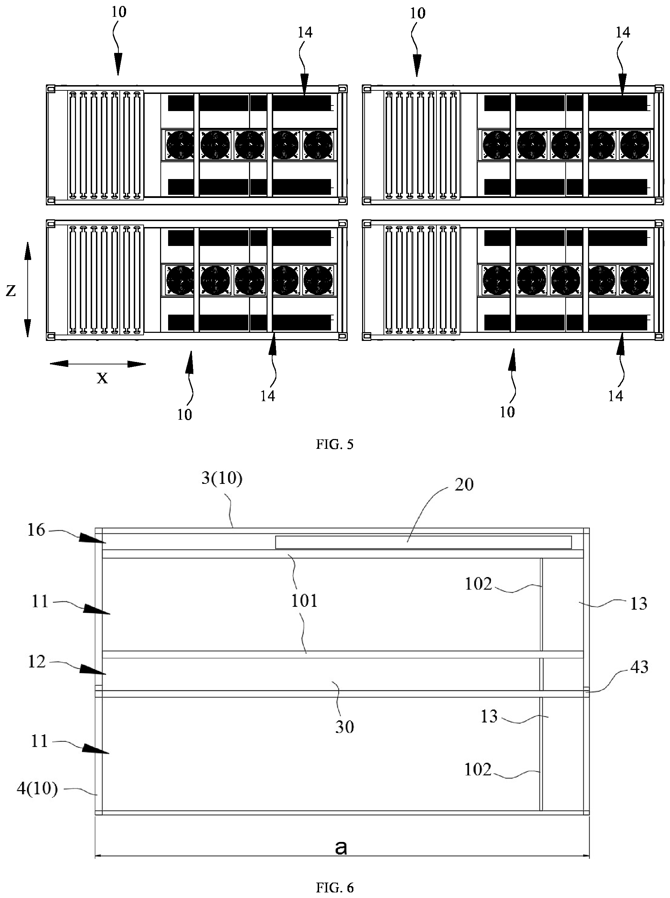

The compartment body 10 is typically of a rectangular parallelepiped structure. The length direction and the width direction of the compartment body 10 are both parallel to the horizontal plane, and the length direction of the compartment body 10 is parallel to the longest edge of the rectangular parallelepiped structure of the compartment body 10. The height direction of the compartment body 10 is perpendicular to the ground. Illustratively, as shown in FIGs. 3 and 5, the length direction of the compartment body 10 is represented by X, the width direction of the compartment body 10 is represented by Y, and the height direction of the compartment body 10 is represented by Z.

The plurality of compartment bodies 10 being arranged in the height direction of the energy storage apparatus 100 may be understood as that the plurality of compartment bodies 10 are stacked or connected in the height direction of the compartment body 10.

Illustratively, the height direction is the length direction, the width direction, or the height direction of the compartment body 10. The embodiments of the present disclosure are described by taking the height direction being the height direction as an example.

Referring to FIGs. 3 and 6, two or more compartment bodies 10 may be provided in the energy storage apparatus 100. For example, the energy storage apparatus 100 includes two compartment bodies 10, and the two compartment bodies 10 are stacked in the height direction. For another example, the energy storage apparatus 100 includes three compartment bodies 10, and the three compartment bodies 10 are stacked in the height direction. As an example, the sum of the heights of all compartment bodies 10 stacked in the height direction is less than or equal to the sum of the heights of eight standard containers stacked.

The energy storage apparatus 100 further includes a plurality of energy units 2. The energy units 2 are configured to provide or store electric energy.

Here, the energy unit 2 may be a battery cell, or may be a battery apparatus 80 formed by electrically connecting a plurality of battery cells.

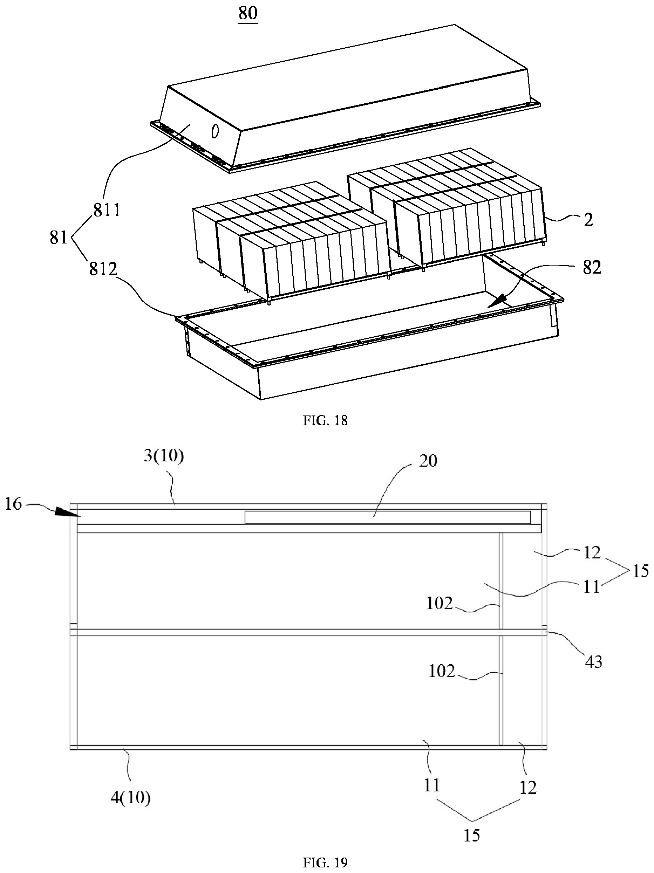

Referring to FIG. 18, the plurality of energy units 2 may form a plurality of layers and/or columns of battery apparatuses 80, and each row or column of battery apparatuses 80 includes a plurality of battery apparatuses 80.

The battery apparatus 80 according to the embodiments of the present disclosure may include one or more battery cell assemblies for providing voltage and capacity. The battery cell assembly may include a plurality of battery cells connected in series, in parallel, or in series-parallel by a busbar component.

In some embodiments, a battery cell assembly is typically formed by the arrangement of a plurality of battery cells.

As an example, the battery cell assembly may be a battery module, in which a plurality of battery cells are arranged and fixed to form an independent module. As an example, the battery module may be formed by strapping the plurality of battery cells with a cable tie.

In some embodiments, the battery apparatus 80 may be a battery pack including a case 81 and one or more battery cell assemblies, and the battery cell assemblies are accommodated in the case 81.

As an example, the battery cell assembly may be a battery module, and the battery cell assembly may be accommodated in the case 81 by fixing the battery module in the case 81.

As an example, the battery cell assembly may also be accommodated in the case 81 by directly fixing the plurality of battery cells to the case 81.

As an example, referring to FIG. 18, the case 81 may include a first case 811 and a second case 812. The first case 811 and the second case 812 are fastened together, so as to form an enclosed space inside the case 81 to receive the battery cell assembly. The term "enclosed" here refers to being covered or closed, which may be sealed or unsealed. The first case 811 may be a top cover or a bottom plate.

As an example, the case 81 may include a top cover, a frame, and a bottom plate. The top cover and the bottom plate are separately connected to the frame, so as to form the enclosed space inside the case 81 to receive the battery cell assembly.

Illustratively, the plurality of compartment bodies 10 each accommodate the energy unit 2.

Here, the number of energy units 2 accommodated in each compartment body 10 may or may not be the same.

Illustratively, the energy unit 2 may be a battery module or a battery pack.

In some embodiments, referring to FIG. 4, the energy storage apparatus 100 includes a control module 30, and the control module 30 is configured to electrically control the energy units 2 in the plurality of compartment bodies 10.

In this embodiment, by providing the control module 30, the control module 30 can control the input or output of electric energy of the energy unit 2 to achieve the electrical control of the energy unit 2.

Illustratively, the dimension of each compartment body 10 in the height direction is less than the dimension of one standard container in the height direction.

That is, the dimension of all the compartment bodies 10 in the height direction is less than the dimension of one standard container in the height direction.

Referring to FIGs. 3 and 6, a dimension a of the compartment body 10 in the length direction is a distance between two ends of the compartment body 10 in the length direction; a dimension b of the compartment body 10 in the width direction is a distance between two ends of the compartment body 10 in the width direction; a dimension h of the compartment body 10 in the height direction is a distance between two ends of the compartment body 10 in the height direction. The dimension a, the dimension b, and the dimension h are the maximum dimensions of the outer contour of the compartment body 10 in corresponding directions. The compartment body 10 of the compartment body 10 may include eight corner pieces and six case walls, the eight corner pieces are located at eight corners of the rectangular parallelepiped structure of the compartment body 10, the eight corner pieces separately protrude from the case walls of the compartment body 10, the total span of two corner pieces arranged in the height direction is the height of the compartment body 10, the total span of two corner pieces arranged in the length direction is the length of the compartment body 10, and the total span of two corner pieces arranged in the width direction is the width of the compartment body 10. When the dimension of the compartment body 10 is calculated, neither pipelines nor cables that are connected to the compartment body 10 and located outside the compartment body 10 may be counted as the dimension of the compartment body 10.

The standard container may be the dimension of a standard container during transportation, for example, 10 feet, 20 feet, 30 feet, 40 feet, or 45 feet, which meets the corresponding standard, and the length, the width, and the height of the standard container have corresponding dimensions, respectively. For the standard container, reference can be made to GB/T 1413-2023 Series 1 freight containers-Classification, dimensions and ratings.

The 10 feet may include: The dimension in the length direction is 2991 mm, with a tolerance of 0 mm-5 mm; the dimension in the width direction is 2438 mm, with a tolerance of 0 mm-5 mm; the dimension in the height direction is 2438 mm or less than 2438 mm, with a tolerance of 0 mm-5 mm.

The 20 feet may include: The dimension in the length direction is 6058 mm, with a tolerance of 0 mm-6 mm; the dimension in the width direction is 2438 mm, with a tolerance of 0 mm-5 mm; the dimension in the height direction is 2896 mm, 2591 mm, or not greater than 2438 mm, with a tolerance of 0 mm-5 mm.

The 30 feet may include: The dimension in the length direction is 9125 mm, with a tolerance of 0 mm-10 mm; the dimension in the width direction is 2438 mm, with a tolerance of 0 mm-5 mm; the dimension in the height direction is 2896 mm, 2591 mm, or not greater than 2438 mm, with a tolerance of 0 mm-5 mm.

The 40 feet may include: The dimension in the length direction is 12192 mm, with a tolerance of 0 mm-10 mm; the dimension in the width direction is 2438 mm, with a tolerance of 0 mm-5 mm; the dimension in the height direction is 2896 mm, 2591 mm, or not greater than 2438 mm, with a tolerance of 0 mm-5 mm.

The 45 feet may include: The dimension in the length direction is 13716 mm, with a tolerance of 0 mm-10 mm; the dimension in the width direction is 2438 mm, with a tolerance of 350 mm-5 mm; the dimension in the height direction is 2591 mm or 2896 mm, with a tolerance of 0 mm-5 mm.

In the embodiments of the present disclosure, for the compartment bodies 10 of various dimensions, a dimension within a range of +1%, ±2%, ±3%, +4%, and +5% may be regarded as a dimension within a tolerance range.

The dimension of the compartment body 10 in the height direction is set to be less than the dimension of one standard container in the height direction. By reducing the dimension of the compartment body 10, the total weight of the compartment body 10 containing the energy unit 2 and other components can be reduced, which helps alleviate the problem of overweight during transportation and reduces the transportation cost of the energy storage apparatus 100.

Illustratively, the sum of the dimensions of the plurality of compartment bodies 10 in the height direction is set to be greater than the sum of the dimensions of one or a plurality of standard containers in the height direction.

That is, in one aspect, setting the sum of the dimensions of the plurality of compartment bodies 10 in the height direction to be greater than the sum of the dimensions of the one or the plurality of standard containers in the height direction means that the dimension of at least one compartment body 10 in the height direction is made as large as possible, such that the electric capacity of the energy storage apparatus 100 can be increased as much as possible on the premise of meeting the transportation weight. In another aspect, this helps increase the volume and electric capacity of the energy storage apparatus 100, thereby further reducing the usage cost of the energy storage apparatus 100.

Certainly, in other embodiments, the situation may also be that the sum of the dimensions of the plurality of compartment bodies 10 in the height direction is equal to the sum of the dimensions of the one or the plurality of standard containers in the height direction.

Illustratively, the dimension of at least one compartment body 10 of the plurality of compartment bodies 10 in the height direction being different from the dimensions of the other compartment bodies 10 in the height direction may be that the dimension of one compartment body 10 in the height direction is different from the dimensions of the other compartment bodies 10 in the height direction, or that the dimensions of a plurality of compartment bodies 10 in the height direction are different from the dimensions of the other compartment bodies 10 in the height direction.

The dimension of the at least one compartment body 10 of the plurality of compartment bodies 10 in the height direction being different from the dimensions of the other compartment bodies 10 in the height direction may be that the dimensions of all compartment bodies 10 in the height direction are all different, or that the dimensions of part of the compartment bodies 10 in the height direction are the same.

The dimension of the at least one compartment body 10 of the plurality of compartment bodies 10 in the height direction is different from the dimensions of the other compartment bodies 10 in the height direction. In the height direction of the compartment body 10, the dimensions of part of the compartment bodies 10 of the plurality of compartment bodies 10 in the height direction are not equal to the dimensions of the other part of the plurality of compartment bodies 10 in the height direction.

In this way, it is convenient to improve the flexibility of the capacity of the compartment body 10 and match different requirements.

By setting the dimension of the at least one compartment body 10 of the plurality of compartment bodies 10 in the height direction to be different from the dimensions of the other compartment bodies 10 in the height direction, other components and parts of the energy storage apparatus 100 other than the energy unit 2 can be accommodated in the compartment body 10 with a larger dimension in the height direction. In this way, the energy units 2 accommodated in different compartment bodies 10 can be substantially the same or completely the same, which is conducive to improving the assembly efficiency of the energy unit 2 and reducing the cost. In addition, this helps improve the uniformity of the electric capacity of different compartment bodies 10, thereby improving the performance of the energy storage apparatus 100.

Illustratively, the energy storage apparatus 100 may include three compartment bodies 10. The three compartment bodies 10 are stacked in the height direction, and the dimension of the uppermost compartment body 10 in the height direction is greater than the dimensions of the other compartment bodies 10 in the height direction. The dimensions of regions of the three compartment bodies 10 that are at least configured for accommodating the energy units 2 in the height direction are the same, and the spare region of the uppermost compartment body 10 can be configured to accommodate other components and parts of the energy storage apparatus 100 other than the energy units 2. In this way, the energy units 2 accommodated in different compartment bodies 10 may be substantially the same or completely the same.

According to the energy storage apparatus 100 provided in the embodiments of the present disclosure, by reducing the dimension of the compartment body 10, the total weight of the compartment body 10 and components in the compartment body 10 can be reduced, which helps alleviate the problem of overweight during transportation and reduces the transportation cost of the energy storage apparatus 100. Thus, the usage cost of the energy storage apparatus 100 is reduced. In addition, the sum of the dimensions of the plurality of compartment bodies 10 in the height direction is set to be greater than the sum of the dimensions of the one or the plurality of standard containers in the height direction. That is, in one aspect, setting the sum of the dimensions of the plurality of compartment bodies 10 in the height direction to be greater than the sum of the dimensions of the one or the plurality of standard containers in the height direction means that the dimension of at least one compartment body 10 in the height direction is made as large as possible, such that the electric capacity of the energy storage apparatus 100 can be increased as much as possible on the premise of meeting the transportation weight. In another aspect, this helps increase the volume and electric capacity of the energy storage apparatus 100, thereby further reducing the usage cost of the energy storage apparatus 100. In yet another aspect, the dimension of the at least one compartment body 10 of the plurality of compartment bodies 10 in the height direction is set to be different from the dimensions of the other compartment bodies 10 in the height direction. In this way, it is convenient to improve the flexibility of the capacity of the compartment body 10 and match different requirements. In addition, other components and parts of the energy storage apparatus 100 other than the energy unit 2 can be accommodated in the compartment body 10 with a larger dimension in the height direction. In this way, the energy units 2 accommodated in different compartment bodies 10 can be substantially the same or completely the same, which is conducive to improving the assembly efficiency of the energy unit 2 and reducing the cost. In addition, this helps improve the uniformity of the electric capacity of different compartment bodies 10, thereby improving the performance of the energy storage apparatus 100.

In some embodiments, the standard container is a 20-foot standard container, and the height of the standard container is 2896 mm, 2591 mm, or 2438 mm.

The sum of the dimensions of m1 compartment bodies 10 in the height direction is less than the height of the 20-foot standard container, which is 2896 mm, 2591 mm, or 2438 mm, and the sum of the dimensions of m1+1 compartment bodies 10 in the height direction is greater than the height of the 20-foot standard container, which is 2896 mm, 2591 mm, or 2438 mm.

In some embodiments, the dimension of each compartment body 10 in the height direction is greater than or equal to one third of the dimension of a standard container in the height direction, and is less than the dimension of one standard container in the height direction.

Illustratively, the energy storage apparatus 100 may include three compartment bodies 10. The three compartment bodies 10 are stacked in the height direction, and the sum of the dimensions of the three compartment bodies 10 in the height direction is greater than the dimension of one standard container in the height direction.

Illustratively, the energy storage apparatus 100 may include two compartment bodies 10. The two compartment bodies 10 are stacked in the height direction, and the sum of the dimensions of the two compartment bodies 10 in the height direction is greater than the dimension of one standard container in the height direction.

The dimension of the compartment body 10 cannot be infinitely small. When the dimension of the compartment body 10 in the height direction is greater than or equal to one third of the dimension of the standard container in the height direction, the energy storage apparatus 100 exhibits high manufacturability and high volumetric energy density, and is more convenient for transportation and mounting.

In some embodiments, the dimension of each compartment body 10 in the height direction is greater than or equal to one half of the dimension of a standard container in the height direction, and is less than the dimension of one standard container in the height direction.

When the dimension of the compartment body 10 in the height direction is greater than or equal to one half of the dimension of the standard container in the height direction, the energy storage apparatus 100 exhibits high manufacturability and high volumetric energy density, and is more convenient for transportation and mounting. For example, when the energy storage apparatus 100 includes two stacked compartment bodies 10, a plurality of energy units 2 are placed in each compartment body 10, and the dimension of each compartment body 10 in the height direction is greater than or equal to one half of the dimension of the standard container in the height direction, and is less than the dimension of one standard container in the height direction. The height of the two stacked compartment bodies 10 is higher than that of the standard container, but the weight of each compartment body 10 containing the energy unit 2 and other components is lower. With this arrangement, each compartment body 10, containing the energy unit 2 and other components, of the energy storage apparatus 100 can be transported individually, and after the compartment bodies are stacked at the usage site, the electric capacity of the energy storage apparatus 100 is higher.

In some embodiments, the dimension of each compartment body 10 in the height direction is greater than or equal to one third of the dimension of the standard container in the height direction, and is less than one half of the dimension of the standard container in the height direction.

Illustratively, the situation may be that a plurality of energy units 2 are placed in each compartment body 10, or that a plurality of energy units 2 are placed in part of the compartment bodies 10, and no energy unit 2 is placed in the other part of the compartment bodies 10. A control module 30 may be placed in the compartment body 10 where no energy unit 2 is placed. Certainly, the control module 30 may also be placed in the compartment body 10 where the plurality of energy units 2 are placed.

When the dimension of the compartment body 10 in the height direction is greater than or equal to one third of the dimension of the standard container in the height direction, the energy storage apparatus 100 exhibits high manufacturability and high volumetric energy density, and is more convenient for transportation and mounting. For example, when the energy storage apparatus 100 includes three stacked compartment bodies 10, a plurality of energy units 2 are placed in each compartment body 10, and the dimension of each compartment body 10 in the height direction is greater than or equal to one third of the dimension of the standard container in the height direction, and is less than one half of the dimension of the standard container in the height direction. The height of the three stacked compartment bodies 10 is higher than that of the standard container, but the weight of each compartment body 10 containing the energy unit 2 and other components is lower. With this arrangement, each compartment body 10, containing the energy unit 2 and other components, of the energy storage apparatus 100 can be transported individually, and after the compartment bodies are stacked at the usage site, the electric capacity of the energy storage apparatus 100 is higher.

Certainly, in some other embodiments, the situation may be that only one compartment body 10 meets the above dimension requirements, and some other compartment bodies 10 do not meet the above requirements. For example, some other compartment bodies 10 may have the dimensions of the standard container.

In some embodiments, m compartment bodies 10 are provided, the sum of the dimensions of m1 compartment bodies 10 of the m compartment bodies 10 in the height direction is less than the sum of the dimensions of n standard containers in the height direction, and the sum of the dimensions of m1+1 compartment bodies 10 of the m compartment bodies 10 in the height direction is greater than the sum of the dimensions of the n standard containers in the height direction, where m is greater than m1, m is greater than or equal to 2, and m1 is greater than or equal to n.

Here, the sum of the dimensions of the m1 compartment bodies 10 in the height direction is set to be less than the sum of the dimensions of the n standard containers in the height direction, and m1 is greater than or equal to n; that is, the dimension of each compartment body 10 in the height direction is less than the dimension of one standard container in the height direction.

The m1+1 compartment bodies 10 of the m compartment bodies 10 refer to any m1+1 compartment bodies 10 of the m compartment bodies 10. For example, the energy storage apparatus 100 is provided with three compartment bodies 10, which are a first compartment body 3, a second compartment body 4, and a third compartment body 10, respectively. If m1+1 is equal to 2, the 2 compartment bodies 10 may be the first compartment body 3 and the third compartment body 10, may be the first compartment body 3 and the second compartment body 4, or may be the second compartment body 4 and the third compartment body 10.

The situation may be that m1+1 is less than m, the sum of the dimensions of the m1 compartment bodies 10 of the m compartment bodies 10 in the height direction is less than the sum of the dimensions of the n standard containers in the height direction, and the sum of the dimensions of the m1+1 compartment bodies 10 of the m compartment bodies 10 in the height direction is greater than the sum of the dimensions of the n standard containers in the height direction. For example, m is equal to 8, m1+1 is equal to 5, and n is equal to 3. The 5 compartment bodies 10 may be any 5 compartment bodies 10 of the 8 compartment bodies 10.

Alternatively, the situation may be that m1+1 is equal to m, the sum of the dimensions of the m1 compartment bodies 10 of the m compartment bodies 10 in the height direction is less than the sum of the dimensions of the n standard containers in the height direction, and the sum of the dimensions of the m1+1 compartment bodies 10 of the m compartment bodies 10 in the height direction is greater than the sum of the dimensions of the n standard containers in the height direction. For example, m is equal to 2, and the sum of the heights of the two compartment bodies 10 is greater than the height of one standard container.

It can be understood that m, m1, and n are all positive integers.

In some embodiments, m1 = 1, and n = 1.

The situation may be that the energy storage apparatus 100 includes more than two compartment bodies 10. For example, the energy storage apparatus 100 includes 3, 5, or 8 compartment bodies 10. Alternatively, the situation may be that only two compartment bodies 10 are in the energy storage apparatus 100.

The height of at least one compartment body 10 is set to be less than the height of one standard container, and the sum of the heights of two compartment bodies 10 after stacking is set to be greater than the height of one standard container. By reducing the dimension of the compartment body 10, the total weight of the compartment body 10 containing the energy unit 2 and other components can be reduced, which helps alleviate the problem of overweight during transportation and reduces the transportation cost of the energy storage apparatus 100. In another aspect, setting the sum of the dimensions of the two compartment bodies 10 in the height direction to be greater than the sum of the dimension of one standard container in the height direction means that the dimension of at least one compartment body 10 in the height direction is made as large as possible, such that the electric capacity of the energy storage apparatus 100 can be increased as much as possible on the premise of meeting the transportation weight. In addition, this also helps increase the volume and electric capacity of the energy storage apparatus 100, thereby further reducing the usage cost of the energy storage apparatus 100.

In some embodiments, m1 = 2, and n = 1.

The height of at least one compartment body 10 is set to be less than the height of one standard container, and the sum of the heights of three compartment bodies 10 after stacking is set to be greater than the height of one standard container. By reducing the dimension of the at least one compartment body 10, the energy storage apparatus 100 exhibits high manufacturability and high volumetric energy density, and is more convenient for transportation and mounting. In another aspect, the sum of the dimensions of the three compartment bodies 10 in the height direction is set to be greater than the sum of the dimension of one standard container in the height direction, such that the electric capacity of the energy storage apparatus 100 can be increased as much as possible on the premise of meeting the transportation weight. In addition, this also helps increase the volume and electric capacity of the energy storage apparatus 100, thereby further reducing the usage cost of the energy storage apparatus 100.

In some embodiments, m1 = 2, and n = 2.

The height of at least one compartment body 10 is set to be less than the height of two standard containers, and the sum of the heights of three compartment bodies 10 after stacking is set to be greater than the sum of the heights of two standard containers after stacking. By reducing the dimension of the at least one compartment body 10, the energy storage apparatus 100 exhibits high manufacturability and high volumetric energy density, and is more convenient for transportation and mounting. In another aspect, the sum of the dimensions of the three compartment bodies 10 in the height direction is set to be greater than the sum of the dimension of one standard container in the height direction, such that the electric capacity of the energy storage apparatus 100 can be increased as much as possible on the premise of meeting the transportation weight. In addition, this also helps increase the volume and electric capacity of the energy storage apparatus 100, thereby further reducing the usage cost of the energy storage apparatus 100.

Here, the dimensions of the m compartment bodies 10 in the height direction may be the same, or the dimensions of the m compartment bodies 10 in the height direction may be different.

In some embodiments, referring to FIGs. 6 to 13, the energy storage apparatus 100 further includes a connection mechanism (not shown in the figure). The connection mechanism is configured to be capable of connecting two adjacent compartment bodies 10 in the height direction of the compartment body 10. The connection mechanism includes a support member 43, and the support member 43 is disposed between the two adjacent compartment bodies 10 in the height direction. The sum of the sum of the dimensions of the m1 compartment bodies 10 of the m compartment bodies 10 in the height direction and the sum of the dimensions of m1-1 support members 43 in the height direction is less than the sum of the dimensions of the n standard containers in the height direction, and the sum of the sum of the dimensions of the m1+1 compartment bodies 10 of the m compartment bodies 10 in the height direction and the sum of the dimensions of m1 support members 43 in the height direction is greater than the sum of the dimensions of the n standard containers in the height direction.

Optionally, the compartment bodies 10 that are assembled in the height direction for transportation are connected and fixed via support members 43 therebetween. Thus, the dimensions of the n standard containers formed by the m1 compartment bodies 10 further include the height dimensions of the support members 43 therebetween. That is, when the support members 43 are provided, the dimension of some compartment bodies 10 of the m1 compartment bodies 10 in the height direction may be the sum of their own height and the height of the support members 43 connected thereto. This is because the support member 43 connected to the compartment body 10 in the height direction also occupies, to some extent, the height dimension of the compartment body 10.

Illustratively, when the m1 compartment bodies 10 are all assembled and fixed for transportation via the support members 43, the sum of the sum of the dimensions of the m1 compartment bodies 10 in the height direction and the sum of the dimensions of the m1-1 support members 43 in the height direction is less than the sum of the dimensions of the n standard containers in the height direction, and the sum of the sum of the dimensions of the m1+1 compartment bodies 10 of the m compartment bodies 10 in the height direction and the sum of the dimensions of the m1 support members 43 in the height direction is greater than the sum of the dimensions of the n standard containers in the height direction. Optionally, the number of the support members 43 between the m1 compartment bodies 10 may be less than m1-1. Thus, when these compartment bodies 10 are assembled to the dimension of the standard container, the dimension of the standard container includes the sum of the dimensions of the m1 compartment bodies 10 and the sum of the dimensions of the actual support members 43.

By connecting the compartment bodies 10 via the connection mechanism, the stacking of the compartment bodies 10 can be more stable. During transportation of the compartment bodies 10, the sum of the sum of the dimensions of the m1 compartment bodies 10 in the height direction and the sum of the dimensions of the support members 43 disposed between two adjacent compartment bodies 10 of the m1 compartment bodies 10 in the height direction is less than the sum of the heights of the n standard containers, and the sum of the sum of the dimensions of the m1+1 compartment bodies 10 of the m compartment bodies 10 in the height direction and the sum of the dimensions of the m1 support members 43 in the height direction is greater than the sum of the dimensions of the n standard containers in the height direction. This helps increase the volume and electric capacity of the energy storage apparatus 100, and further reduces the usage cost of the energy storage apparatus 100.

In the energy storage apparatus 100 according to the embodiments of the present disclosure, in the case where the support members 43 are used during transportation and the support members 43 are not required between the compartment bodies 10 that constitute the energy storage apparatus 100, "the sum of the dimensions of the m1 compartment bodies 10 in the height direction being less than the sum of the dimensions of the n standard containers in the height direction, and the sum of the dimensions of the m1+1 compartment bodies 10 in the height direction being greater than the sum of the dimensions of the n standard containers in the height direction" should be understood as including the height of the used support members 43. That is, the sum of the dimensions of the m1 compartment bodies 10 in the height direction is less than the sum of the dimensions of the n standard containers in the height direction minus the sum of the heights of the used support members 43, and the sum of the dimensions of the m1+1 compartment bodies 10 in the height direction is greater than the sum of the dimensions of the n standard containers in the height direction minus the sum of the heights of the used support members 43. Such a case also falls within the scope of the embodiments of the present disclosure.

In some embodiments, referring to FIGs. 3 to 13, the dimension of each compartment body 10 in the length direction thereof is consistent with the dimension of the standard container in the length direction thereof, and the dimension of each compartment body 10 in the width direction thereof is consistent with the dimension of the standard container in the width direction thereof.

In these embodiments, the dimension of the compartment body 10 in the length direction thereof is set to be consistent with the dimension of the standard container in the length direction thereof, and the dimension of the compartment body 10 in the width direction thereof is set to be consistent with the dimension of the standard container in the width direction thereof. This helps match the transportation vehicles and lifting equipment of existing standard containers and reduces the transportation cost of the energy storage apparatus 100, thereby reducing the usage cost of the energy storage apparatus 100.

By setting the dimension of the compartment body 10 in the height direction to be less than the dimension of one standard container in the height direction, the compartment body 10 does not exceed the height, in the height direction of the compartment body 10, of the corresponding standard container for sea or land transportation during transportation, which is conducive to improving the convenience of the compartment body 10 during transportation and reducing the transportation cost. Both the dimension of the compartment body 10 in the length direction and the dimension of the compartment body 10 in the width direction are consistent with those of the standard container, such that the horizontal area occupied by the compartment body 10 during transportation is consistent with that of the standard container. This helps match the transportation vehicles and lifting equipment of existing standard containers and reduces the transportation cost of the energy storage apparatus 100, thereby reducing the usage cost of the energy storage apparatus 100.

In addition, the sum of the dimensions of the m1 compartment bodies 10 of the m compartment bodies 10 in the height direction is less than the sum of the dimensions of the n standard containers in the height direction, and the sum of the dimensions of the m1+1 compartment bodies 10 of the m compartment bodies 10 in the height direction is greater than the sum of the dimensions of the n standard containers in the height direction. This helps increase the volume and electric capacity of the energy storage apparatus 100, thereby further reducing the usage cost of the energy storage apparatus 100. By reducing the dimension of the compartment body 10, the total weight of the compartment body 10 containing the energy unit 2 and other components can be reduced, which helps alleviate the problem of overweight during transportation and reduces the transportation cost of the energy storage apparatus 100. In another aspect, setting the sum of the dimensions of the ml+1 compartment bodies 10 of the m compartment bodies 10 in the height direction to be greater than the sum of the dimensions of the n standard containers in the height direction means that the dimension of at least one compartment body 10 in the height direction is made as large as possible, such that the electric capacity of the energy storage apparatus 100 can be increased as much as possible on the premise of meeting the transportation weight. In addition, this also helps increase the volume and electric capacity of the energy storage apparatus 100, thereby further reducing the usage cost of the energy storage apparatus 100.

In some embodiments, the energy storage apparatus 100 includes an energy storage compartment 100a, the energy storage compartment 100a includes one compartment body 10 and a component disposed in the compartment body 10, and the weight of the energy storage compartment 100a is M, M being less than or equal to 35 tons.

The component disposed in the compartment body 10 is, for example, an energy unit 2, a connection pipeline, a control module 30, or a thermal management module 20.

Here, the energy storage compartment 100a refers to a cabinet body that can be individually transported and individually lifted.

Illustratively, the weight of the energy storage compartment 100a may be any one point value of 10 tons, 15 tons, 20 tons, 25 tons, 30 tons, and 35 tons, or a point value between any two of the point values.

In the process of lifting the energy storage compartment 100a, lifting operations by relevant lifting apparatuses are facilitated, and the transfer of the energy storage compartment 100a is facilitated.

In order to enable a single energy storage compartment 100a to meet the requirements of some countries for transportation limits, the overall weight of the energy storage compartment 100a is controlled to be within 35 tons, and the integration degree of the energy storage compartment 100a is as high as possible, reducing the workload of on-site mounting. In addition, the energy per unit area is increased to reduce the cost input of the customer.

In this embodiment, the sum of the dimensions of the m1 compartment bodies 10 in the height direction is set to be less than the sum of the dimensions of the n standard containers in the height direction, the sum of the dimensions of the m1+1 compartment bodies 10 in the height direction is set to be greater than the sum of the dimensions of the n standard containers in the height direction, and the weight of the energy storage compartment 100a is controlled to be within 35 tons, such that the energy storage compartment 100a can be normally transported and lifted in a plurality of transportation scenarios, such as land transportation and sea transportation. This can avoid, to some extent, the problem that the energy storage compartment 100a exceeds the load limits of roads, bridges, lifting equipment, etc., during transportation due to its overweight, thereby preventing the increase in the transportation cost caused by the need for disassembly of the energy storage compartment 100a for transportation or the use of specialized equipment for transfer.

In some embodiments, referring to FIG. 3, the height dimension of each compartment body 10 is h, where 850mm ≤ h < 2896mm.

Illustratively, the height dimension of the compartment body 10 may be any one point value of 850 mm, 900 mm, 950 mm, 1000 mm, 1050 mm, 1100 mm, 1150 mm, 1200 mm, 1300 mm, 1400 mm, 1500 mm, 1600 mm, 1800 mm, 2000 mm, 2100 mm, 2200 mm, 2300 mm, 2400 mm, 2500 mm, 2600 mm, 2700 mm, 2800 mm, and 2895 mm, or a point value between any two of the point values, and the height dimension is required to meet that the sum of the dimensions of the m1 compartment bodies 10 in the height direction is less than the sum of the dimensions of the n standard containers in the height direction, and the sum of the dimensions of the m1+1 compartment bodies 10 of the m compartment bodies 10 in the height direction is greater than the sum of the dimensions of the n standard containers in the height direction.

In this embodiment, by setting the height dimension of the compartment body 10 to 850mm ≤ h < 2896mm, it is conducive to controlling the total weight of the compartment body 10 and the internal components thereof to be within 35 tons, and the volume and electric capacity of the energy storage apparatus 100 can be increased as much as possible, thereby further reducing the usage cost of the energy storage apparatus 100.

In some embodiments, the height dimension of the compartment body 10 is h, where 1300mm ≤ h ≤ 2400mm.

Illustratively, the height dimension of the compartment body 10 may be any one point value of 1300 mm, 1350 mm, 1400 mm, 1450 mm, 1500 mm, 1550 mm, 1600 mm, 1650 mm, 1700 mm, 1750 mm, 1800 mm, 1850 mm, 1900 mm, 1950 mm, 2000 mm, 2050 mm, 2100 mm, 2150 mm, 2200 mm, 2250 mm, 2300 mm, 2350 mm, and 2400 mm, or a point value between any two of the point values, and the height dimension is required to meet that the sum of the dimensions of the m1 compartment bodies 10 in the height direction is less than the sum of the dimensions of the n standard containers in the height direction, and the sum of the dimensions of the m1+1 compartment bodies 10 of the m compartment bodies 10 in the height direction is greater than the sum of the dimensions of the n standard containers in the height direction.

According to the energy storage apparatus 100 provided in the embodiments of the present disclosure, the sum of the dimensions of the m1 compartment bodies 10 in the height direction is set to be less than the sum of the dimensions of the n standard containers in the height direction, and m1 ≥ n; that is, the dimension of the compartment body 10 in the height direction is less than the dimension of one standard container in the height direction. Thus, in one aspect, by reducing the dimension of the compartment body 10, the total weight of the compartment body 10 and the internal components thereof can be less than the weight of one standard container, thereby matching the standard lifting equipment; that is, the transportation vehicles of existing standard containers can be matched while the weight does not exceed the transportation and road limits. This helps alleviate the problem of overweight during transportation and reduces the transportation cost of the energy storage apparatus 100, thereby reducing the usage cost of the energy storage apparatus 100. In another aspect, by setting the sum of the dimensions of the m1+1 compartment bodies 10 in the height direction to be greater than the sum of the dimensions of the n standard containers in the height direction, the volume and electric capacity of the energy storage apparatus 100 can be increased, thereby further reducing the usage cost of the energy storage apparatus 100.

In some embodiments, referring to FIG. 4, the energy storage apparatus 100 includes a thermal management module 20. The thermal management module 20 is configured to manage the temperatures of a plurality of energy units 2 of the energy storage apparatus 100.

In these embodiments, the thermal management module 20 is provided, such that the thermal management module 20 can manage the temperature of the energy unit 2, thereby reducing the risk of temperature runaway of the energy unit 2.

In some embodiments, referring to FIG. 4, m compartment bodies 10 are provided. The m compartment bodies 10 each accommodate a plurality of energy units 2, and the thermal management module 20 is configured to manage the temperatures of the plurality of energy units 2 of the m compartment bodies 10.

That is, the energy storage apparatus 100 shares the thermal management module 20 to form a complete system, thereby helping save space.

In some embodiments, referring to FIG. 4, m compartment bodies 10 are provided. The m compartment bodies 10 each accommodate a plurality of energy units 2, and the control module 30 is configured to electrically control the plurality of energy units 2 of the m compartment bodies 10.

That is, the energy storage apparatus 100 shares the control module 30 to form a complete system, thereby helping save space.

In some embodiments, referring to FIG. 4, the control module 30 is accommodated in at least one compartment body 10.

Here, the situation may be that part of the compartment bodies 10 accommodate the control module 30, or that all the compartment bodies 10 accommodate the control module 30.

In an embodiment where part of the compartment bodies 10 accommodate the control modules 30, the compartment bodies 10 without the control modules 30 can electrically control the energy units 2 via the control modules 30 in the other compartment bodies 10.

Illustratively, the energy storage apparatus 100 includes two compartment bodies 10, which are a first compartment body 3 and a second compartment body 4, respectively. The first compartment body 3 accommodates the control module 30, a plurality of energy units 2 are provided in both the first compartment body 3 and the second compartment body 4, and the control module 30 of the first compartment body 3 can electrically control the energy units 2 of the first compartment body 3 and the second compartment body 4.

When all the compartment bodies 10 accommodate the control modules 30, and a plurality of energy units 2 are provided in both the first compartment body 3 and the second compartment body 4, the control modules 30 in all the compartment bodies 10 may work together to electrically control the plurality of energy units 2 of the first compartment body 3 and the second compartment body 4. Alternatively, the control module 30 in each compartment body 10 may also operate independently; that is, the control module 30 in the first compartment body 3 electrically controls the plurality of energy units 2 in the first compartment body 3, and the control module 30 in the second compartment body 4 electrically controls the plurality of energy units 2 in the second compartment body 4.

In some embodiments, referring to FIG. 4, the thermal management module 20 is accommodated in at least one compartment body 10.

The thermal management module 20 may be a liquid cooling unit, an air conditioner, a ground-source cooling device, or a seawater cooling device.

Here, the situation may be that part of the compartment bodies 10 accommodate the thermal management module 20, or that all the compartment bodies 10 accommodate the thermal management module 20.

In an embodiment where part of the compartment bodies 10 accommodate the thermal management modules 20, the compartment bodies 10 without the thermal management modules 20 can control the temperatures of the energy units 2 via the thermal management modules 20 in the other compartment bodies 10.

Illustratively, the energy storage apparatus 100 includes two compartment bodies 10, which are a first compartment body 3 and a second compartment body 4, respectively. The first compartment body 3 accommodates the thermal management module 20, the second compartment body 4 is not provided with the thermal management module 20, and the thermal management module 20 of the first compartment body 3 can control the temperatures of the energy units 2 of the first compartment body 3 and the second compartment body 4.

When all the compartment bodies 10 accommodate the thermal management modules 20, and a plurality of energy units 2 are provided in both the first compartment body 3 and the second compartment body 4, the thermal management modules 20 in all the compartment bodies 10 may work together to control the temperatures of the plurality of energy units 2 of the first compartment body 3 and the second compartment body 4. Alternatively, the thermal management module 20 in each compartment body 10 may also operate independently; that is, the thermal management module 20 in the first compartment body 3 controls the temperatures of the plurality of energy units 2 in the first compartment body 3, and the thermal management module 20 in the second compartment body 4 controls the temperatures of the plurality of energy units 2 in the second compartment body 4.

As an example, when the control module 30 and the thermal management module 20 in the first compartment body 3 and the second compartment body 4 can operate independently, the first compartment body 3 and the internal components thereof may be considered as an independent energy storage apparatus 100, and the second compartment body 4 and the internal components thereof may be considered as an independent energy storage apparatus 100. As an example, when the control module 30 and the thermal management module 20 in the first compartment body 3 and the second compartment body 4 need to jointly control the energy units 2 in the two compartment bodies 10, the first compartment body 3 and the internal components thereof, and the second compartment body 4 and the internal components thereof may be considered to jointly form an energy storage apparatus 100. Certainly, in this case, the situation may also be that only part of the energy units 2 are operated. For example, only the energy units 2 in the first compartment body 3 are subjected to electrical control and temperature control, such that the energy units 2 in the first compartment body 3 input or output electric energy, and the energy units 2 in the second compartment body 4 do not output electric energy, which may be determined according to actual use requirements.

Due to the dimension of the energy unit 2, there may be a case where the energy units 2 do not fully occupy the compartment body 10. By disposing the control module 30 and/or the thermal management module 20 in the compartment body 10, the space in the compartment body 10 can be fully utilized, thereby further improving the space utilization rate of the compartment body 10.

In addition, the control module 30 and/or the thermal management module 20 are mounted together with the compartment body 10, and the pipelines and wires of the control module 30 and/or the thermal management module 20 are connected at the time of delivery, reducing the mounting workload of on-site mounting of the pipelines and wires of the control module 30 and/or the thermal management module 20, thus helping reduce the mounting cost.

Certainly, in other embodiments, the control module 30 and/or the thermal management module 20 may also be disposed outside the compartment body 10.

Illustratively, at least part of the control modules 30 are disposed outside the compartment body 10.

That is, the situation may be that part of the control modules 30 are disposed outside the compartment body 10, and part of the control modules 30 are disposed in the compartment body 10, or that all the control modules 30 are disposed outside the compartment body 10.

Here, by disposing the at least part of the control modules 30 outside the compartment body 10, the impact of the control module 30 on the energy unit 2 can be reduced to some extent, and the control module 30 does not occupy the space in the compartment body 10. In addition, the maintenance and replacement of the control module 30 are facilitated.

Here, the control module 30 disposed outside the compartment body 10 may be connected to at least one compartment body 10, or the control module 30 disposed outside the compartment body 10 and the compartment body 10 are spaced apart, and the two are connected by using a connection wire or a connection pipeline.

Illustratively, at least part of the thermal management modules 20 are disposed outside the compartment body 10.

That is, the situation may be that part of the thermal management modules 20 are disposed outside the compartment body 10, and part of the thermal management modules 20 are disposed in the compartment body 10, or that all the thermal management modules 20 are disposed outside the compartment body 10.

Here, by disposing the at least part of the thermal management modules 20 outside the compartment body 10, the impact of the thermal management module 20 on the energy unit 2 can be reduced to some extent, and the thermal management module 20 does not occupy the space in the compartment body 10. In addition, the maintenance and replacement of the thermal management module 20 are facilitated.

Here, the thermal management module 20 disposed outside the compartment body 10 may be connected to at least one compartment body 10, or the thermal management module 20 disposed outside the compartment body 10 and the compartment body 10 are spaced apart, and the two are connected by using a connection wire or a connection pipeline.

Certainly, the situation may also be that part of the structure of the thermal management module 20 is disposed outside the compartment body 10, and the other part of the structure is disposed in the compartment body 10.

Illustratively, the thermal management module 20 includes a heat dissipation fan. The heat dissipation fan is disposed outside the compartment body 10. For another example, the thermal management module 20 includes a heat dissipation fan and a heat exchanger. The heat dissipation fan and the heat exchanger are disposed outside the compartment body 10.

In this way, the heat exchange between the heat dissipation fan, the heat dissipation fan, and the heat exchanger, and the outside is facilitated, thereby improving the heat exchange efficiency.

In some embodiments, the energy storage apparatus 100 may also not include the thermal management module 20.

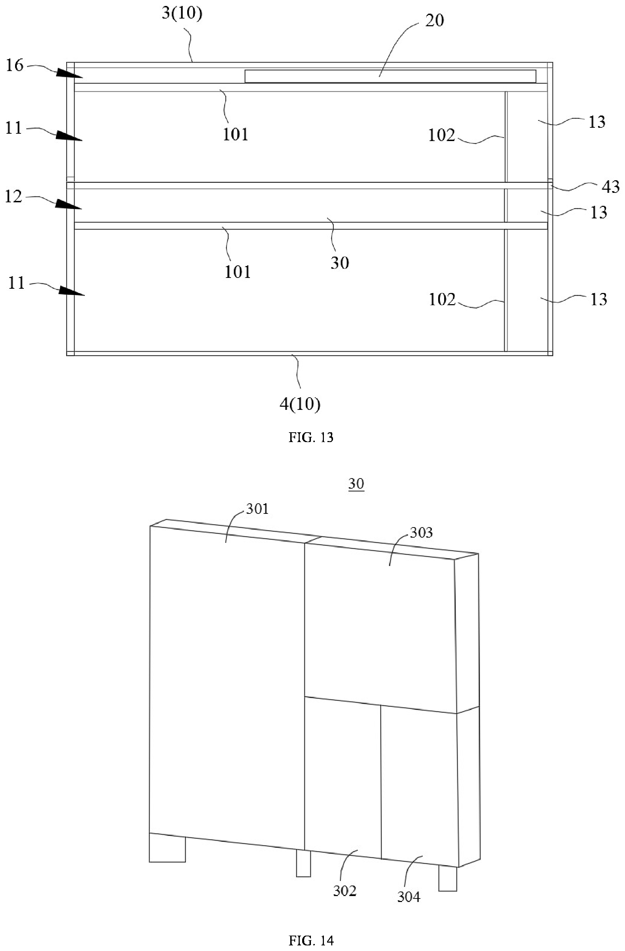

In some embodiments, referring to FIG. 14, the control module 30 includes at least one of a master control module 301, a power distribution module 302, a general control module 303, and a fire protection control module 304.

The energy unit 2 is electrically connected to the master control module 301. The master control module 301 is electrically connected to the general control module 303. The master control module 301, the general control module 303, and the fire protection control module 304 are all electrically connected to the power distribution module 302.

The master control module 301 is configured to control the input and output of high-voltage electric energy of the energy unit 2 in the compartment body 10. The general control module 303 is configured to control the on/off actions of the master control module 301 in the compartment body 10.

The fire protection control module 304 is configured to control the action of a fire protection element in the case of a fire caused by temperature imbalance in the compartment body 10. The fire protection element may be a fire extinguisher, and the like, and the fire protection element may be disposed in the compartment body 10.

The power distribution module 302 is configured to electrically connect the master control module 301, the general control module 303, and the fire protection control module 304, thereby facilitating the circuit conduction between the master control module 301, the general control module 303, and the fire protection control module 304, and maintaining the normal operation of the master control module 301, the general control module 303, and the fire protection control module 304.

Here, in an embodiment where the energy storage apparatus 100 includes a plurality of control modules 30, the plurality of control modules 30 may be the same or different.

Illustratively, each compartment body 10 is provided with a control module 30; that is, the control module 30 is in a one-to-one correspondence with the compartment body 10, and one control module 30 correspondingly controls the input and output of the electric energy of the energy unit 2 in one compartment body 10, thereby facilitating the electrical control of the energy unit 2 by the control module 30.

Illustratively, referring to FIGs. 6 to 13, part of the compartment bodies 10 are provided with the control module 30, and the other part of the compartment bodies 10 are not provided with the control module 30. That is, one control module 30 correspondingly controls the input or output of the electric energy of the energy units 2 in a plurality of compartment bodies 10. For example, when two compartment bodies 10 are provided, one compartment body 10 is provided with the control module 30 therein, and the other compartment body 10 is not provided with the control module 30. The control module 30 correspondingly controls the input or output of the electric energy of the energy units 2 in the two compartment bodies 10.

Certainly, the situation may also be that one compartment body 10 is provided with a plurality of control modules 30, a plurality of energy units 2 are provided in the one compartment body 10, the plurality of energy units 2 are connected in series to form a battery cluster, a plurality of battery clusters are connected in parallel, and one control module 30 may correspondingly control one or a plurality of battery clusters.

The thermal management module 20 includes a heat exchange unit. The heat exchange unit is, for example, a liquid cooling unit. Referring to FIG. 4, the thermal management module 20 may perform heat exchange on the energy unit 2 via a heat exchange conduit 40 (for example, a liquid cooling pipeline 90), thereby achieving the management of the temperature of the energy unit 2 and reducing the risk of temperature runaway of the energy unit 2.

Illustratively, each compartment body 10 is provided with a thermal management module 20; that is, the thermal management module 20 is in a one-to-one correspondence with the compartment body 10, and one thermal management module 20 correspondingly manages the temperature of the energy unit 2 in one compartment body 10.

Illustratively, referring to FIGs. 6 to 13, part of the plurality of compartment bodies 10 are provided with the thermal management module 20, and the other part of the compartment bodies 10 are not provided with the thermal management module 20. That is, one thermal management module 20 correspondingly manages the temperatures of the energy units 2 in a plurality of compartment bodies 10. For example, when two compartment bodies 10 are provided, one compartment body 10 is provided with the thermal management module 20 therein, and the other compartment body 10 is not provided with the thermal management module 20. The thermal management module 20 may perform heat exchange on the energy units 2 in the two compartment bodies 10 via the heat exchange conduit 40 (for example, the liquid cooling pipeline 90); that is, the thermal management module 20 can correspondingly manage the temperatures of the energy units 2 in the two compartment bodies 10.

In some embodiments, the plurality of compartment bodies 10 include one first compartment body 3 and at least one second compartment body 4. The first compartment body 3 is located above the second compartment body 4, and the thermal management module 20 is located in the first compartment body 3.

That is, the first compartment body 3 is located at the top of the energy storage apparatus, and the thermal management module 20 is located in the first compartment body 3 at the top.

Illustratively, the thermal management module 20 is located at the top of the first compartment body 3.

In this embodiment, the thermal management module 20 is disposed in the topmost first compartment body 3, and there is no shield above the thermal management module 20, which facilitates the heat dissipation of the thermal management module 20, thereby prolonging the service life of the energy storage apparatus 100. Meanwhile, it helps reduce the overall center of gravity height of a single compartment body 10, which is beneficial to transportation safety. In addition, the separation design from an energy compartment 11 helps improve the heat preservation effect of the energy compartment 11. Meanwhile, the thermal management module 20 shields the heat radiation at the top, thereby reducing the impact of the heat radiation on the inside of the energy compartment 11.

In some embodiments, the dimension of the compartment body 10 accommodating the thermal management module 20 in the height direction is greater than the dimensions of other compartment bodies 10 in the height direction.

That is, the height of the first compartment body 3 is greater than the height of the second compartment body 4.

In this way, it helps increase the space in the compartment body 10 accommodating the thermal management module 20, thereby reducing the impact of the thermal management module 20 on the accommodating volume of the energy unit 2, that is, enabling the compartment body 10 to have sufficient space to accommodate the energy unit 2 and the thermal management module 20. In addition, the thermal management module 20 with a higher cooling capacity can be placed to improve the thermal management capacity.

In some embodiments, the thermal management module 20 includes a fan and a condenser. The fan and the condenser are located at the top of the first compartment body 3, a vent 14 is formed in the top wall and/or the side wall of the first compartment body 3, and the vent 14 is configured for ventilation of the thermal management module 20.

Illustratively, the thermal management module 20 includes a cooling circulation loop and a refrigerant circulation loop. A thermal management component 82 forms part of the cooling circulation loop, and the condenser forms part of the refrigerant circulation loop. The thermal management module 20 and the energy unit 3 are independent of each other, thereby reducing the risk of mutual interference between the thermal management module 20 and the energy unit 3.

The coolant liquid can circulate in the coolant liquid circulation loop, and the coolant liquid can circulate through the thermal management component 82 to exchange heat with the energy unit 3, thereby cooling the energy unit 3. The coolant liquid after the heat exchange with the energy unit 3 can also circulate through an evaporator and exchange heat with the evaporator, such that the heat exchanged from the energy unit 3 is transferred to the evaporator through heat exchange, thereby cooling the coolant liquid.

The condenser is a component for exchanging heat with a refrigerant flowing therethrough.

The evaporator is disposed in both the coolant liquid circulation loop and the refrigerant circulation loop. A coolant liquid flow channel and a refrigerant flow channel are provided inside the evaporator. The coolant liquid flow channel participates in forming the coolant liquid circulation loop, and the coolant liquid flow channel is configured for the coolant liquid to flow therein. The refrigerant flow channel participates in forming the refrigerant circulation loop, and the refrigerant flow channel is configured for the refrigerant to flow therein. The coolant liquid flow channel and the refrigerant flow channel are not in communication with each other, such that the coolant liquid and the refrigerant do not mix. In the evaporator, the coolant liquid can exchange heat with the refrigerant, particularly the heat of the coolant liquid can be transferred to the refrigerant through heat exchange, such that the evaporator can cool the coolant liquid flowing therethrough.

Illustratively, the fan is configured to dissipate heat for the condenser.

Here, forming the vent 14 in the top wall of the first compartment body 3 may be that the entire surface of the top wall of the compartment body 10 is opened to form one vent 14, or that part of the top wall of the compartment body 10 is opened to form one vent 14. For example, an opening is formed in one side of the top wall of the compartment body 10 in the length direction, such that part of the top wall of the compartment body 10 forms the vent 14.

As an example, the vent 14 in the top wall of the compartment body 10 may be configured for air exhaust, and the vent 14 in the side wall of the compartment body 10 may be configured for air intake.

In this embodiment, the vent 14 is formed in the top wall and/or the side wall of the first compartment body 3, which facilitates the heat dissipation of the thermal management module 20, such that the thermal management module 20 can have more heat dissipation channels, thereby improving the temperature control effect of the thermal management module 20.

In some embodiments, referring to FIGs. 3 to 13, an energy compartment 11 and a control compartment 12 are provided inside at least part of the compartment bodies 10. The energy compartment 11 is configured to accommodate at least one energy unit 2, and at least part of control modules 30 and/or at least part of thermal management modules 20 are accommodated in the control compartment 12.

Here, the at least part of the control modules 30 and/or the at least part of the thermal management modules 20 being accommodated in the control compartment 12 means that the at least part of the control modules 30 may be accommodated in the control compartment 12, or the at least part of the thermal management modules 20 may be accommodated in the control compartment 12, or the at least part of the control modules 30 and the at least part of the thermal management modules 20 may be accommodated in the control compartment 12.

Illustratively, the situation may be that part of the control modules 30 and/or part of the thermal management modules 20 are accommodated in the control compartment 12 in the compartment body 10, and the other part of the control modules 30 and/or the other part of the thermal management modules 20 are disposed outside the compartment body 10; or that all the control modules 30 and/or all the thermal management modules 20 are accommodated in the control compartment 12 in the compartment body 10.

Illustratively, in an embodiment where control compartments 12 are provided inside a plurality of compartment bodies 10, the control modules 30 in all the compartment bodies 10 may work together, or the control module 30 in each compartment body 10 may operate independently.

Illustratively, in an embodiment where thermal management modules 20 are provided inside a plurality of compartment bodies 10, the thermal management modules 20 in all the compartment bodies 10 may work together, or the thermal management module 20 in each compartment body 10 may operate independently.

In this embodiment, by providing the energy compartment 11 and the control compartment 12 inside the at least part of the compartment bodies 10, and disposing the at least part of the control modules 30 and/or the at least part of the thermal management modules 20 in the compartment body 10, the space in the compartment body 10 can be fully utilized, thereby further improving the space utilization rate of the compartment body 10.

In some embodiments, at least part of the compartment bodies 10 include a first partition member 101. The first partition member 101 is disposed between the energy compartment 11 and the control compartment 12, and the energy compartment 11 and the control compartment 12 share the first partition member 101.

Here, the first partition member 101 may include a metal plate.

Here, the first partition member 101 is conducive to improving the structural strength of the compartment body 10, and is also conducive to improving the sealing performance and heat preservation performance of the energy compartment 11.

The first partition member 101 is provided with a heat exchange conduit 40 and a connection wire harness 50 in a penetrating manner. The connection wire harness 50 includes a high-voltage wire harness 51 and/or a low-voltage wire harness 52. The thermal management module 20 in the control compartment 12 may perform heat exchange on the energy unit 2 in the energy compartment 11 via the heat exchange conduit 40 (for example, the liquid cooling pipeline 90), and the control module 30 in the control compartment 12 may electrically control the energy unit 2 in the energy compartment 11 via the connection wire harness 50.

As an example, when the heat exchange conduit 40 and the connection wire harness 50 penetrate through the first partition member 101, the penetrated positions may be sealed.

Illustratively, a heat insulation medium is filled inside the first partition member 101.

Here, the heat insulation medium may be some materials capable of heat insulation, such as heat insulation cotton.

The heat insulation medium not only helps improve the structural strength of the first partition member 101, but also can provide flame-retardant and heat preservation effects, which is conducive to reducing the heat loss of the energy compartment 11 and the impact of external heat on the energy unit 2 in the energy compartment 11.

Here, in some embodiments, the compartment body 10 includes a plurality of control compartments 12. The control compartment 12 may accommodate the control module 30 and the thermal management module 20, or all the control compartments 12 may accommodate control modules 30, or all the control compartments 12 may accommodate thermal management modules 20.

In some embodiments, a plurality of control compartments 12 are provided. The first partition member 101 may be further disposed between adjacent control compartments 12, and the adjacent control compartments 12 share the first partition member 101.

Illustratively, the first partition member 101 separates the thermal management module 20 from the control module 30, to reduce the risk of interference between the thermal management module 20 and the control module 30, thereby improving the reliability of the energy storage apparatus 100.

The thermal management module 20 and the control module 30 are separated by using the first partition member 101. The first partition member 101 can separate the thermal management module 20 from the control module 30, such that the interference of the thermal management module 20 to the control module 30 can be reduced; that is, the electromagnetic interference of a high-voltage line to a low voltage can be reduced, and the impact of external rainfall or sunlight exposure on the control module 30 can also be reduced.

The energy compartment 11 and the control compartment 12 can be arranged in various manners.

In some embodiments, at least part of the control compartments 12 and energy compartments 11 are arranged in the height direction of the compartment body 10.

Here, the situation may be that part of the control compartments 12 and energy compartments 11 are arranged in the height direction of the compartment body 10, or that all the control compartments 12 and energy compartments 11 are arranged in the height direction of the compartment body 10.

As an example, the control compartment 12 is disposed above the energy compartment 11. In this way, the components in the control compartment 12 can shield the heat radiation at the top, thereby reducing the impact of the heat radiation on the inside of the energy compartment 11.

Illustratively, at least part of the control compartments 12 and energy compartments 11 are arranged in the length direction of the compartment body 10.

Here, the situation may be that part of the control compartments 12 and energy compartments 11 are arranged in the length direction of the compartment body 10, or that all the control compartments 12 and energy compartments 11 are arranged in the length direction of the compartment body 10.

Here, the control compartment 12 is arranged at the end part of the compartment body 10, thereby maximizing the utilization of the space inside the compartment body 10. In addition, the control compartment 12 can be arranged closer to the energy compartment 11, thereby helping improve the compactness of the structure.

In some embodiments, referring to FIGs. 3 and 4, at least part of the control compartments 12 accommodate the thermal management module 20, and the thermal management module 20 is located at the top of the topmost compartment body 10.

In this embodiment, the thermal management module 20 is located at the top of the topmost compartment body 10, and there is no shield above the thermal management module 20, which facilitates the heat dissipation of the thermal management module 20, thereby prolonging the service life of the energy storage apparatus 100. Meanwhile, it helps reduce the overall center of gravity height of a single compartment body 10, which is beneficial to transportation safety. In addition, the separation design from an energy compartment 11 helps improve the heat preservation effect of the energy compartment 11. Meanwhile, the thermal management module 20 shields the heat radiation at the top, thereby reducing the impact of the heat radiation on the inside of the energy compartment 11.

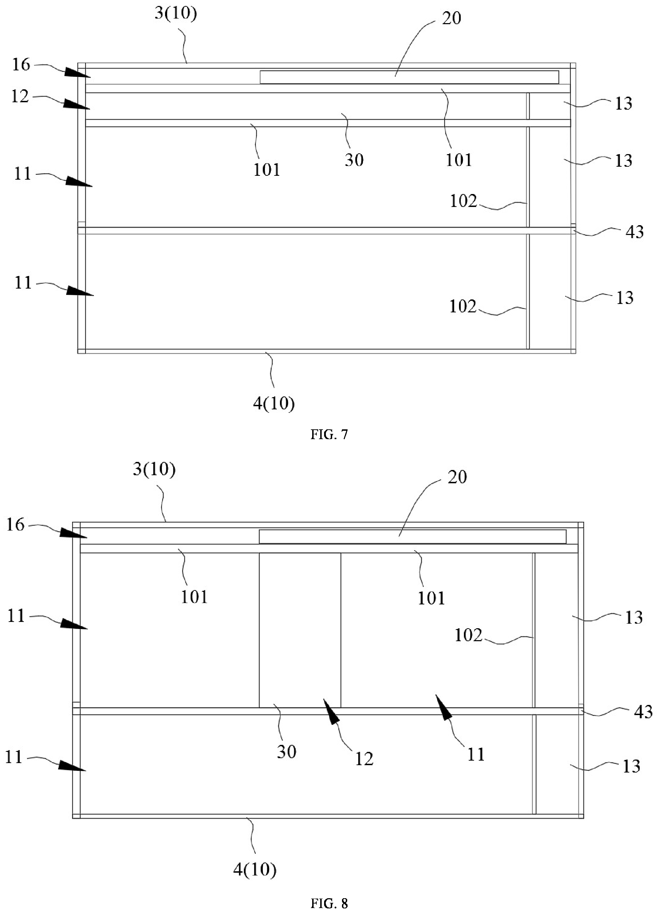

In some embodiments, referring to FIGs. 6 and 7, at least part of the control compartments 12 accommodate the control module 30. The control module 30 and the energy compartment 11 are arranged in the height direction of the compartment body 10.

That is, the control module 30 may be above the energy compartment 11, may be below the energy compartment 11, or may be in the middle of two energy compartments 11 in the height direction.

For example, when two compartment bodies 10 are provided, the control module 30 is disposed at the top of the lower compartment body 10, that is, located above the energy compartment 11 of the lower compartment body 10. The height of the operating section meets the ergonomic requirements, allowing the maintenance personnel to easily reach the control section's operating handle while standing on one side of the compartment body 10, facilitating maintenance and repair. Meanwhile, the positioning of the control compartment 12 at the top helps shorten the length of the high-voltage wire harness 51 and the low-voltage wire harness 52 connected to the upper compartment body 10, thereby reducing the cost.

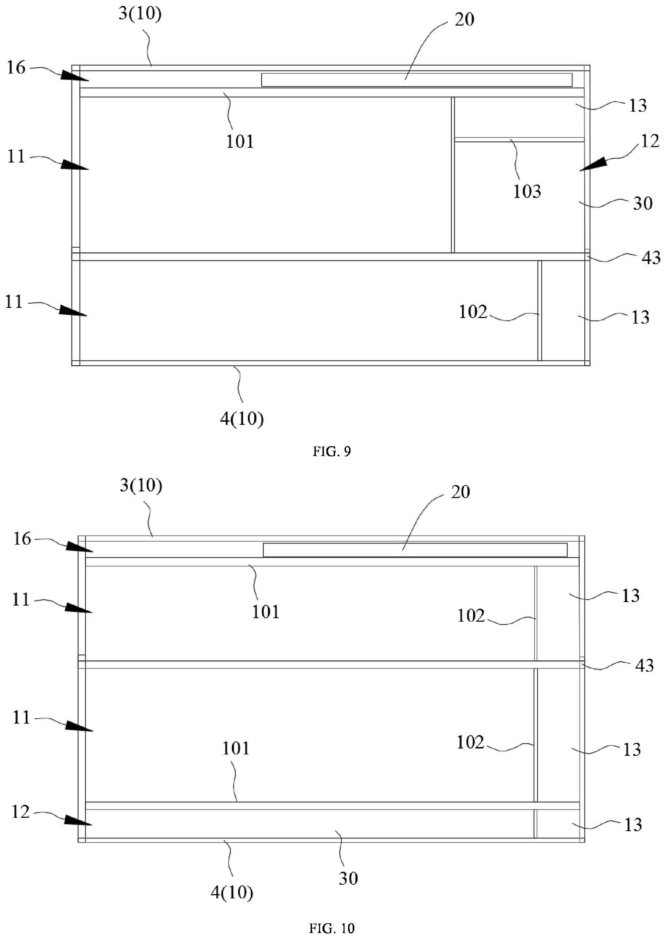

In some embodiments, referring to FIGs. 8 and 9, at least part of the control compartments 12 accommodate the control module 30. The control module 30 and the energy compartment 11 are arranged in the length direction of the compartment body 10.

That is, the control module 30 may be at the left end of the energy compartment 11, may be at the right end of the energy compartment 11, or may be in the middle of two energy compartments 11 in the length direction.

In some embodiments, referring to FIGs. 3 to 13, the energy storage apparatus 100 includes a pipeline compartment 13. The pipeline compartment 13 is at least configured to accommodate at least part of connection pipelines among the control module 30, the thermal management module 20, and the energy unit 2.

Illustratively, the connection pipeline may be a liquid cooling pipeline 90, a high-voltage wire harness 51, a low-voltage wire harness 52, a fire protection pipeline, a water fire protection pipeline, or the like.

The pipeline compartment 13 is at least configured to accommodate the at least part of the connection pipelines among the control module 30, the thermal management module 20, and the energy unit 2; that is, the connection pipes and/or connection wires among the control module 30, the thermal management module 20, and the energy unit 2 may partially penetrate through the pipeline compartment 13, or may all penetrate through the pipeline compartment 13.

Certainly, the pipeline compartment 13 may be further configured to accommodate other components of the energy storage apparatus 100, such as the fire protection control module 304.

Illustratively, the high-voltage wire harness 51 and the low-voltage wire harness 52 connecting the pipeline compartment 13 with the energy compartment 11 and the control compartment 12 are both connected via connectors mounted on the partition wall; the pipeline connection between the pipeline compartment 13 and the energy compartment 11 is achieved via liquid cooling adapters; all through-wall interfaces are sealed.

In this embodiment, the energy storage apparatus 100 is provided with the pipeline compartment 13, and the pipeline compartment 13 is configured to accommodate the at least part of the connection pipelines among the control module 30, the thermal management module 20, and the energy unit 2. This facilitates the routing of wires and pipelines, facilitates a reasonable layout of the connection pipelines, and facilitates the maintenance and replacement.

In some embodiments, referring to FIGs. 6 to 9, each compartment body 10 is provided with a pipeline compartment 13; that is, one compartment body 10 is provided with one pipeline compartment 13. Certainly, one compartment body 10 may also be provided with a plurality of pipeline compartments 13, and at least part of connection pipelines among the control module 30, the thermal management module 20, and the energy unit 2 in one compartment body 10 may be accommodated in the corresponding pipeline compartment 13. In this way, it facilitates the routing of wires and pipelines, facilitates a reasonable layout of the connection pipelines, and facilitates the maintenance and replacement.

In some embodiments, part of the compartment bodies 10 are provided with the pipeline compartment 13, and the other part of the compartment bodies 10 are not provided with the pipeline compartment 13.

The part of the compartment bodies 10 are provided with the pipeline compartment 13, and the other part of the compartment bodies 10 are not provided with the pipeline compartment 13; that is, one pipeline compartment 13 correspondingly accommodates at least part of connection pipelines among the control modules 30, the thermal management modules 20, and the energy units 2 of a plurality of compartment bodies 10. For example, when two compartment bodies 10 are provided, one compartment body 10 is provided with the pipeline compartment 13, and the other compartment body 10 is not provided with the pipeline compartment 13. The pipeline compartment 13 correspondingly accommodates at least part of the connection pipelines among the control modules 30, the thermal management modules 20, and the energy units 2 of the two compartment bodies 10.

In some embodiments, referring to FIGs. 10 to 13, an energy compartment 11 and a control compartment 12 are provided inside at least part of the compartment bodies 10. The energy compartment 11 is configured to accommodate at least one energy unit 2, and at least part of control modules 30 and/or at least part of thermal management modules 20 are accommodated in the control compartment 12. The pipeline compartment 13 is disposed inside the compartment body 10, and the pipeline compartment 13 and the energy compartment 11 are arranged in the length direction of the compartment body 10.

That is, the pipeline compartment 13 may be at the left end of the energy compartment 11, may be at the right end of the energy compartment 11, or may be in the middle of two energy compartments 11 in the length direction.

Certainly, in an embodiment where the control compartment 12 is provided, the pipeline compartment 13 and the energy compartment 11 may be arranged in the length direction of the compartment body 10, or may be arranged in the height direction of the compartment body 10.

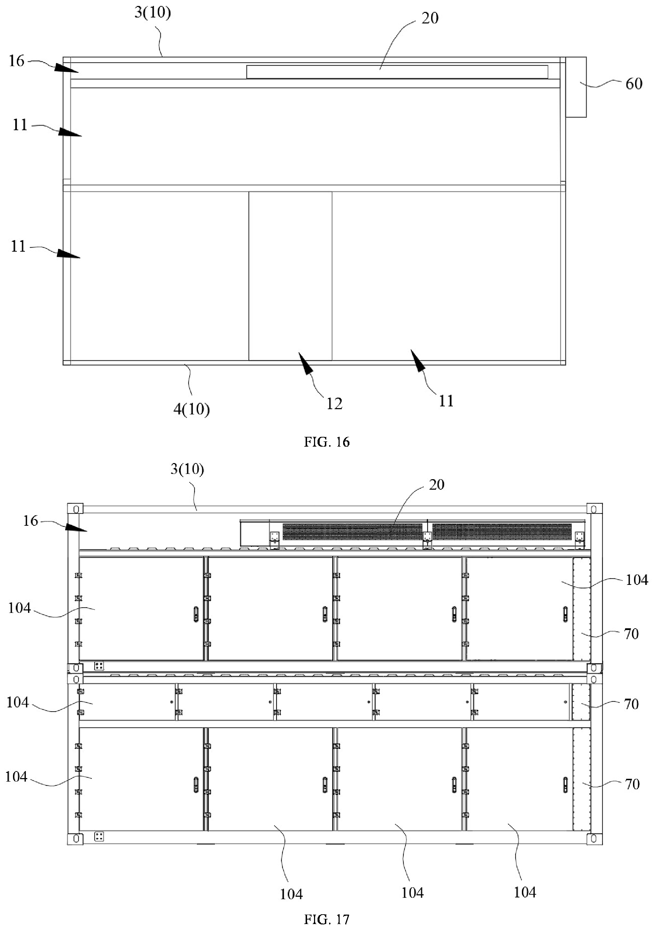

In some other embodiments, referring to FIG. 16, the pipeline compartment 13 is disposed outside the compartment body 10. Illustratively, a protection cover 60 is provided. The pipeline compartment 13 is disposed inside the protection cover 60, or the protection cover 60 and the compartment body 10 define the pipeline compartment 13.

It should be noted that in an embodiment where the pipeline compartment 13 is disposed outside the compartment body 10, the pipeline compartment 13 does not belong to the compartment body 10. Therefore, the dimension of the pipeline compartment 13 is not included in the dimension of the compartment body 10.

In some embodiments, referring to FIGs. 6 to 9, at least part of the compartment bodies 10 include a second partition member 102. The second partition member 102 is disposed between the energy compartment 11 and the pipeline compartment 13, and the energy compartment 11 and the pipeline compartment 13 share the second partition member 102.

Here, the second partition member 102 may include a metal plate.

Here, the second partition member 102 is conducive to improving the structural strength of the compartment body 10, and is also conducive to improving the sealing performance and heat preservation performance of the energy compartment 11.

In some embodiments, referring to FIGs. 9 and 13, at least part of the compartment bodies 10 include a third partition member 103. The third partition member 103 is disposed between the pipeline compartment 13 and at least part of the control compartments 12, and the pipeline compartment 13 and the at least part of the control compartments 12 share the third partition member 103.

Here, the third partition member 103 may include a metal plate.

Here, the third partition member 103 is conducive to improving the structural strength of the compartment body 10, and is also conducive to improving the sealing performance and heat preservation performance of part of the control compartments 12.

Illustratively, the control compartment 12 accommodating the thermal management module 20 may be in communication with the pipeline compartment 13, such that the energy compartment 11 is connected to the control compartment 12 accommodating the thermal management module 20 via the pipeline compartment 13.

Illustratively, the control compartment 12 accommodating the control module 30 may be separated from the pipeline compartment 13.

In some embodiments, referring to FIG. 4, the energy compartment 11, the control compartment 12, and the pipeline compartment 13 are each provided with a first compartment door 104. The first compartment doors 104 of the energy compartment 11, the control compartment 12, and the pipeline compartment 13 are all located on the front side of the compartment body 10.

In this embodiment, the first compartment doors 104 of the energy compartment 11, the control compartment 12, and the pipeline compartment 13 are all disposed on the front side of the compartment body 10, such that maintenance can be performed via the respective first compartment doors 104. This reduces the land waste caused by the need to reserve a maintenance channel of more than 3 m between adjacent compartment bodies 10 in the conventional compartment body 10, and only a normal maintenance channel for paint repair needs to be reserved between the grid-patterned compartment bodies 10, which increases the user's land investment returns and increases the user's energy returns per unit area.

In some embodiments, referring to FIG. 17, an energy compartment 11 and a control compartment 12 are provided inside at least part of the compartment bodies 10. The energy compartment 11 is configured to accommodate at least one energy unit 2, and at least part of control modules 30 and/or at least part of thermal management modules 20 are/is accommodated in the control compartment 12. A first compartment door 104 is provided on at least one side of the compartment body 10 in the width direction, and a second compartment door 70 is provided on at least one side of the control compartment 12 and/or the pipeline compartment 13 in the width direction.

Here, the second compartment door 70 may be a maintenance door. By providing the maintenance door, the maintenance for the energy storage apparatus 100 is facilitated via the maintenance door.

The energy compartment 11, the control compartment 12, and the pipeline compartment 13 may all be provided with the maintenance door.

In some embodiments, referring to FIG. 17, the second compartment door 70 is provided on at least one side of the control compartment 12 and/or the pipeline compartment 13 in the width direction.

That is, the second compartment door 70 may be provided on at least one side of the compartment body 10 in the width direction, or the second compartment doors 70 may be provided on both sides of the compartment body in the width direction, such that the second compartment door 70 is provided in the region of the compartment body 10 corresponding to at least part of the control compartment 12 and/or at least part of the pipeline compartment 13.

Illustratively, the second compartment door 70 is disposed on each of the right side of the upper compartment body 10, the right side of the control compartment 12, and the right side of the lower compartment body 10. Maintenance on the liquid cooling pipeline 90, the high-voltage wire harness 51, the low-voltage wire harness 52, and the like can be performed by opening the second compartment doors 70.

In this embodiment, it helps reduce the land waste caused by the need to reserve a maintenance channel of more than 3 m between adjacent compartment bodies 10 in the conventional compartment body 10, and only a normal maintenance channel for paint repair needs to be reserved between the grid-patterned compartment bodies 10, which increases the user's land investment returns and increases the user's energy returns per unit area.

In some embodiments, referring to FIGs. 6 to 13, and 19, the height of the topmost compartment body 10 is greater than the heights of the other compartment bodies 10, and the topmost compartment body 10 accommodates at least part of thermal management modules 20.

Here, part of the thermal management modules 20 may be accommodated in the topmost compartment body 10, or all the thermal management modules 20 may be accommodated in the topmost compartment body 10.

Here, by configuring the topmost compartment body 10 to accommodate the at least part of the thermal management modules 20, the thermal management module 20 can be located at the top of the energy storage apparatus 100, and there is no shield above the thermal management module 20, which further facilitates the heat dissipation of the thermal management module 20.

The height of the topmost compartment body 10 is set to be greater than the heights of the other compartment bodies 10. In this way, it helps increase the space in the compartment body 10 accommodating the thermal management module 20, thereby reducing the impact of the thermal management module 20 on the accommodating volume of the energy unit 2. Additionally, different compartment bodies 10 can have substantially the same or completely the same space for accommodating the energy unit 2, which helps improve the versatility of the energy unit 2 part.

Illustratively, the energy storage apparatus 100 may include three compartment bodies 10. The three compartment bodies 10 are stacked in the height direction, and the height of the topmost compartment body 10 is greater than the heights of the two lower compartment bodies 10.

Illustratively, the energy storage apparatus 100 may include two compartment bodies 10. The two compartment bodies 10 are stacked in the height direction, and the height of the upper compartment body 10 is greater than the height of the two lower compartment bodies 10.

In this embodiment, the topmost compartment body 10 is configured to accommodate at least part of thermal management modules 20. This facilitates the heat dissipation of the thermal management module 20, such that the thermal management module 20 can have more heat dissipation channels, thereby improving the temperature control effect of the thermal management module 20. Meanwhile, it helps reduce the overall center of gravity height of a single energy storage compartment 100a, which is beneficial to transportation safety. In addition, the thermal management module 20 can shield the heat radiation at the top, thereby reducing the impact of the heat radiation on the inside of the energy compartment 11. Besides, the height of the topmost compartment body 10 is set to be greater than the heights of the other compartment bodies 10. In this way, it helps increase the space in the compartment body 10 accommodating the thermal management module 20, thereby reducing the impact of the thermal management module 20 on the accommodating volume of the energy unit 2, that is, enabling the compartment body 10 to have sufficient space to accommodate the energy unit 2 and the thermal management module 20. In addition, the thermal management module 20 with a higher cooling capacity can be placed to improve the thermal management capacity. Moreover, substantially the same or completely the same space can be provided in different compartment bodies 10 for accommodating the energy unit 2, which helps improve the universality of the energy unit 2 part, and improve the assembly efficiency of the energy unit 2, thereby reducing the cost. In addition, it helps improve the uniformity of the electric capacity of different compartment bodies 10, thereby improving the performance of the energy storage apparatus 100.

In some embodiments, referring to FIGs. 6 to 13, and 19, except for the topmost compartment body 10, the heights of the other compartment bodies 10 are the same.

Illustratively, the energy storage apparatus 100 may include three compartment bodies 10. The three compartment bodies 10 are stacked in the height direction, the height of the topmost compartment body 10 is greater than the heights of the two lower compartment bodies 10, and the heights of the two lower compartment bodies 10 are the same.

In this embodiment, except for the topmost compartment body 10, the heights of the other compartment bodies 10 are set to be the same. That is, except for the topmost compartment body 10, the other compartment bodies 10 can adopt the same compartment body 10, which helps improve the versatility of the compartment body 10, thereby reducing the cost.

Certainly, in other embodiments, the energy storage apparatus 100 may include three compartment bodies 10. The three compartment bodies 10 are stacked in the height direction, the height of the topmost compartment body 10 is greater than the heights of the two lower compartment bodies 10, and the heights of the two lower compartment bodies 10 are different.

In some embodiments, referring to FIGs. 6 to 13, and 19, the plurality of compartment bodies 10 include one first compartment body 3 and at least one second compartment body 4. The first compartment body 3 is located above the second compartment body 4. The second compartment body 4 includes a main body portion 15, and the first compartment body 3 includes a main body portion 15 and a mounting portion 16 disposed above the main body portion 15. At least part of thermal management modules 20 are accommodated in the mounting portion 16, and the main body portion 15 is configured to accommodate at least one energy unit 2.

Here, the one first compartment body 3 and the at least one second compartment body 4 are stacked in the height direction, and the height of the first compartment body 3 is greater than the height of the second compartment body 4.

Here, both the first compartment body 3 and the second compartment body 4 are provided with the main body portion 15, and the main body portion 15 is configured to accommodate at least one energy unit 2. In this way, it helps improve the versatility of the main body portions 15 of the first compartment body 3 and the second compartment body 4, and improve the assembly efficiency of the energy unit 2, thereby reducing the cost. In addition, it helps improve the uniformity of the electric capacity of different compartment bodies 10, thereby improving the performance of the energy storage apparatus 100.

The first compartment body 3 further includes the mounting portion 16 disposed above the main body portion 15, and the at least part of the thermal management modules 20 are accommodated in the mounting portion 16. That is, the first compartment body 3 has an additional mounting portion 16 compared to the second compartment body 4, and the mounting portion 16 is configured to accommodate the at least part of the thermal management modules 20. In this way, it helps increase the space in the first compartment body 3 for accommodating the thermal management module 20, thereby reducing the impact of the thermal management module 20 on the volume of the main body portion 15, that is, enabling the first compartment body 3 to have sufficient space to accommodate the energy unit 2 and the thermal management module 20. In addition, the thermal management module 20 with a higher cooling capacity can be placed to improve the thermal management capacity. In addition, disposing the mounting portion 16 above the main body portion 15 facilitates the heat dissipation of the thermal management module 20, such that the thermal management module 20 can have more heat dissipation channels, thereby improving the temperature control effect of the thermal management module 20. Meanwhile, it helps reduce the overall center of gravity height of a single energy storage compartment 100a, which is beneficial to transportation safety. In addition, the thermal management module 20 can shield the heat radiation at the top, thereby reducing the impact of the heat radiation on the inside of the energy compartment 11.

In some embodiments, referring to FIGs. 6 to 13, and 19, an energy compartment 11 and a control compartment 12 are provided inside the main body portion 15. The energy compartment 11 is configured to accommodate at least one energy unit 2, and at least part of control modules 30 and/or at least part of thermal management modules 20 are accommodated in the control compartment 12.

Here, the at least part of the control modules 30 and/or the at least part of the thermal management modules 20 being accommodated in the control compartment 12 means that the at least part of the control modules 30 may be accommodated in the control compartment 12, or the at least part of the thermal management modules 20 may be accommodated in the control compartment 12, or the at least part of the control modules 30 and the at least part of the thermal management modules 20 may be accommodated in the control compartment 12.

Illustratively, the situation may be that all the thermal management modules 20 are accommodated in the mounting portion 16, or that part of the thermal management modules 20 are accommodated in the mounting portion 16, and the other part of the thermal management modules 20 are accommodated in the control compartment 12 of the main body portion 15.

In this embodiment, by providing the energy compartment 11 and the control compartment 12 inside the main body portion 15, and disposing the at least part of the control modules 30 and/or the at least part of the thermal management modules 20 in the control compartment 12, the space in the compartment body 10 can be fully utilized, thereby further improving the space utilization rate of the compartment body 10.

In some embodiments, referring to FIGs. 6 to 13, a pipeline compartment 13 is further provided inside the main body portion 15.

In some embodiments, referring to FIGs. 6 to 13, and 19, at least part of the thermal management modules 20 are accommodated in the control compartment 12 of the first compartment body 3, and at least part of the control modules 30 are accommodated in the control compartment 12 of the second compartment body 4.

The at least part of the control modules 30 being accommodated in the control compartment 12 of the second compartment body 4 may be that all the control modules 30 are accommodated in the control compartment 12 of the second compartment body 4, or that part of the control modules 30 are accommodated in the control compartment 12 of the second compartment body 4, and the other part of the control modules 30 are accommodated in the control compartment 12 of the first compartment body 3.

Illustratively, the thermal management module 20 includes a fan, a compressor, an evaporator, a condenser, and the like.

Here, part of components (a fan and the like) of the thermal management module 20 are accommodated in the mounting portion 16, and part of components (a compressor, an evaporator, a condenser, and the like) of the thermal management module 20 are accommodated in the first compartment body 3 or the second compartment body 4, such that the power conversion system is electrically connected to the energy units in the first compartment body and the second compartment body.

In this embodiment, by accommodating the part of the components (a fan and the like) of the thermal management module 20 in the mounting portion 16, it facilitates the heat dissipation of the thermal management module 20, such that the thermal management module 20 can have more heat dissipation channels, thereby improving the temperature control effect of the thermal management module 20, and helping reduce the auxiliary power consumption of the thermal management module 20; by accommodating the part of the components (a compressor, an evaporator, a condenser, and the like) of the thermal management module 20 in the control compartment 12 of the first compartment body 3, it helps reduce the overall height of the first compartment body 3, lower the center of gravity at the same time, and improve the space utilization rate of the first compartment body 3, enabling a more reasonable structural layout.

In some embodiments, referring to FIGs. 6 to 13, and 19, the energy storage apparatus 100 includes a power conversion system. The power conversion system is accommodated in the first compartment body 3 or the second compartment body 4, and the power conversion system is electrically connected to the energy units in the first compartment body 3 and the second compartment body 4.

The power conversion system (PCS) can control the charging and discharging process of a storage battery, perform alternating current and direct current conversion, and directly supply power to an alternating current load without a power grid. The PCS includes a DC/AC bidirectional converter, a control unit, and the like. The PCS controller receives a background control instruction through communication and controls, according to the symbol and the value of the power instruction, the converter to charge or discharge the battery, so as to adjust the active power and reactive power of the power grid. The PCS controller communicates with the BMS via a CAN interface to acquire the state information of the battery set, such that the protective charging and discharging of the battery can be achieved.

Here, the situation may be that part of the control modules 30 are accommodated in the control compartment 12 of the first compartment body 3, and the other part of the control modules 30 are accommodated in the control compartment 12 of the second compartment body 4.

Here, the situation may be that part of the power conversion systems are accommodated in the control compartment 12 of the second compartment body 4, and the other part of the power conversion systems are accommodated in the control compartment 12 of the first compartment body 3.

In order to facilitate the rapid mounting on site by the customer, at least part of the power conversion systems are accommodated in the control compartment 12 of the second compartment body 4, such that the connection to the PCS can be completed after the compartment bodies 10 are stacked on site, which helps reduce the workload of on-site assembly and improves the assembly efficiency, thereby facilitating the use by the customer.

In some embodiments, referring to FIGs. 6 to 13, the plurality of compartment bodies 10 include a first compartment body 3 and a second compartment body 4. The first compartment body 3 is located above the second compartment body 4, and at least the first compartment body 3 accommodates a plurality of energy units 2. The thermal management module 20 is disposed in the first compartment body 3 and located at the top of the plurality of energy units 2, and the control module 30 is disposed in the first compartment body 3 and/or the second compartment body 4.

The first compartment body 3 and the second compartment body 4 are stacked in the height direction, and the first compartment body 3 is located above the second compartment body 4.

The control module 30 being disposed in the first compartment body 3 and/or the second compartment body 4 means that the control module 30 may be disposed in the first compartment body 3, may be disposed in the second compartment body 4, or may be disposed in the first compartment body 3 and the second compartment body 4.

The first compartment body 3 is located above the second compartment body 4, such that the thermal management module 20 can be located at the top of the energy storage apparatus 100. There is no shield above the thermal management module 20, thereby further facilitating the heat dissipation of the thermal management module 20. In addition, the thermal management module 20 may be further separated from the control module 30, such that the interference of the thermal management module 20 to the control module 30 can be reduced.

In this embodiment, the thermal management module 20 is accommodated in the control compartment 12 of the first compartment body 3 located above, and the control module 30 is accommodated in the control compartment 12 of the second compartment body 4 located below, such that the interference of the thermal management module 20 to the control module 30 can be reduced. In addition, the thermal management module 20 is located in the first compartment body 3 above, which further facilitates the heat dissipation of the thermal management module 20, such that the thermal management module 20 can have more heat dissipation channels, thereby improving the temperature control effect of the thermal management module 20. Meanwhile, it helps reduce the overall center of gravity height of a single energy storage compartment 100a, which is beneficial to transportation safety. In addition, the separation design from an energy compartment 11 helps improve the heat preservation effect of the energy compartment 11. Meanwhile, the thermal management module 20 shields the heat radiation at the top, thereby reducing the impact of the heat radiation on the inside of the energy compartment 11.

In some other embodiments, the thermal management module 20 may alternatively be disposed at the bottom of the first compartment body 3, and/or disposed at the bottom of the second compartment body 4, and/or disposed at the top of the second compartment body 4.

Illustratively, the first compartment body 3 includes an energy compartment 11, a pipeline compartment 13, and a control compartment 12 accommodating the thermal management module 20. The energy compartment 11 is separated from the pipeline compartment 13 and the control compartment 12 accommodating the thermal management module 20, the control compartment 12 accommodating the thermal management module 20 is in communication with the pipeline compartment 13, and the energy compartment 11 is connected to the upper control compartment 12 accommodating the thermal management module 20 via the pipeline compartment 13, and is connected to the lower compartment body 10 at the same time. The energy compartment 11 accommodates the energy units 2, a connection pipeline between the energy units 2, a connection wire harness 50 between the energy units 2, a main liquid cooling pipeline 91, a fire protection sensor, and the like. The pipeline compartment 13 includes a liquid cooling pipeline 90 passing through a wall, a high-voltage wire harness 51, a low-voltage wire harness 52, a fire protection pipeline, a water fire protection pipeline, and the like. The control compartment 12 accommodating the thermal management module 20 includes a liquid cooling unit and a fixing support thereof, and a vent 14 is formed in the top wall and/or the side wall of the control compartment 12 accommodating the thermal management module 20; the vent 14 is configured for ventilation of the thermal management module 20.

Illustratively, the second compartment body 4 includes an energy compartment 11, a pipeline compartment 13, and a control compartment 12 accommodating the control module 30. The energy compartment 11, the pipeline compartment 13, and the control compartment 12 accommodating the control module 30 are separated from each other, and the energy compartment 11 is connected to the upper control compartment 12, the pipeline of the first compartment body 3, and an external high-voltage wire harness 51 and an external low-voltage wire harness 52 via the pipeline compartment 13. The energy compartment 11 includes energy units 2, a connection pipeline between the energy units 2, a main liquid cooling pipeline 91, a connection wire harness 50 between the energy units 2, a fire protection sensor, and the like. The control compartment 12 includes a main control box and a general power distribution control box. The pipeline compartment 13 includes a connection wire harness 50 between the control compartment 12 and the energy compartment 11, a high-voltage wire harness 51 and a low-voltage wire harness 52 connected to the upper energy compartment 11, a pipeline and a wire harness connected to the upper unit, a fire protection control system, a fire protection pipeline, a high-voltage wire harness 51 and a low-voltage wire harness 52 connected to an external PCS and an external energy management system (EMS), a water fire protection pipeline, and the like.

In order to facilitate the rapid mounting on site by the customer, the control module 30 and the thermal management module 20 are integrated inside the compartment body 10, such that the connection to the PCS and the EMS can be performed after the compartment bodies 10 are stacked on site, which helps reduce the workload of on-site assembly and improves the assembly efficiency, thereby facilitating the use by the customer.

An EMS is a set of software and hardware configured to monitor, control, analyze, and optimize an energy system. Through the real-time monitoring and intelligent control of all aspects of energy production, distribution, and consumption, it achieves the efficient management and optimized configuration of energy.

Illustratively, the control module 30 includes two master control modules 301, the two master control modules 301 are located in the first compartment body 3 and the second compartment body 4, respectively, the two master control modules 301 are configured to control the input or output of electric energy of the energy units 2 in the first compartment body 3 and the second compartment body 4, respectively, and the two master control modules 301 are both electrically connected to the general control module 303.

The master control module 301 is configured to control the input and output of high-voltage electric energy of the energy unit 2 in the compartment body 10.

Here, both the first compartment body 3 and the second compartment body 4 are provided with the master control module 301, which facilitates the connection between the master control module 301 and the energy units 2 in the first compartment body 3 and the second compartment body 4.

Illustratively, the control module 30 includes a general control module 303, and the general control module 303 is located in the second compartment body.

The general control module 303 is configured to control the on/off actions of the master control module 301 in the compartment body 10.

Here, the general control module 303 is located in the second compartment body to facilitate maintenance. In addition, one general control module 303 cooperates with two master control modules 301, which helps save space and reduce the cost.

Illustratively, the control module 30 includes a fire protection control module 304, and the fire protection control module 304 is located in the first compartment body 3 or the second compartment body 4 and configured for the fire protection of the energy units 2 in the first compartment body 3 and the second compartment body 4.

Here, a fire protection sensor, a fire protection pipeline, and the like are disposed in the first compartment body 3 and the second compartment body 4 and configured for use in conjunction with the fire protection control module 304.

Fire protection is performed on the energy units 2 in the first compartment body 3 and the second compartment body 4 via one fire protection control module 304, which helps save space and reduce the cost.

In some embodiments, referring to FIG. 13, the control module 30 is disposed in the second compartment body 4 and located at the top of the plurality of energy units 2 of the second compartment body 4.

In this embodiment, by disposing the control module 30 in the second compartment body 4 and at the top of the plurality of energy units 2 of the second compartment body 4, the height of the operating section meets the ergonomic requirements, allowing the maintenance personnel to easily reach the control section's operating handle while standing on one side of the compartment body 10, facilitating the maintenance and repair. Meanwhile, the positioning of the control compartment 12 at the top helps shorten the length of the high-voltage wire harness 51 and the low-voltage wire harness 52 connected to the upper compartment body 10, thereby reducing the cost. In addition, it further helps reduce the overall center of gravity height of a single compartment body 10 and improve the transportation safety.

In some other embodiments, the control module 30 may alternatively be disposed at the bottom or the side portion of the first compartment body 3; and/or disposed at the bottom of the second compartment body 4; and/or disposed at the top of the second compartment body 4.

In some embodiments, referring to FIG. 4, at least part of the compartment bodies 10 include a first connector 6, the first connector 6 being electrically connected to the control module 30; each compartment body 10 includes a second connector 7, the second connector 7 being electrically connected to the energy unit 2; the first connector 6 is configured to cooperate with each second connector 7.

The at least part of the compartment bodies 10 including the first connector 6 means that part of the compartment bodies 10 may include the first connector 6, and the other part of the compartment bodies 10 do not include the first connector 6; or all the compartment bodies 10 may include the first connector 6.

The first connector 6 may be directly connected to the second connector 7 to achieve the cooperation between the first connector 6 and the second connector 7. For example, the first connector 6 is in insertion fit with each second connector 7. The first connector 6 may be fixed to the control compartment 12, and the second connector 7 may be movably disposed on the compartment body 10; or the first connector 6 may be movably disposed on the control compartment 12, and the second connector 7 may be fixedly disposed on the compartment body 10; or the first connector 6 and the second connector 7 may be movably disposed on the control compartment 12 and the compartment body 10, respectively. The first connector 6 may include a plurality of connecting parts, and the connecting parts are connected to the second connectors 7 in a one-to-one correspondence, to achieve a connection between the first connector 6 and the plurality of second connectors 7.

Illustratively, the first connector 6 is disposed on, for example, the first partition member 101 and/or the third partition member 103 of the control compartment 12.

Alternatively, the first connector 6 and the second connector 7 may be connected by a connecting member, and the connecting member may be a cable. The first connector 6 and the second connector 7 may be separately fixed to the compartment body 10; or the first connector 6 may be fixed to the compartment body 10, and the second connector 7 may be movably disposed on the compartment body 10; or the first connector 6 may be movably disposed on the compartment body 10, and the second connector 7 may be fixedly disposed on the compartment body 10; or the first connector 6 and the second connector 7 may be separately movably disposed on the compartment body 10.

As an example, the first connector 6 is fixedly disposed on the control compartment 12, two second connectors 7 are fixed to two compartment bodies 10, respectively, and the first connector 6 and the second connectors 7 are connected by cables. The cable may be a quick-connect cable, both ends of the cable are provided with quick-connect connectors, and the two quick-connect connectors are connected to the first connector 6 and the second connector 7, respectively.

In an embodiment where the first connector 6 and the second connector 7 are connected by a cable, the cable may at least partially pass through the inside of the compartment body 10, or part of the cable may extend to the outside of the compartment body 10; or the interface of the first connector 6 may be located outside the control compartment 12, and the entire cable may be located outside the control compartment 12; or the interface of the second connector 7 may be located outside the compartment body 10, and the entire cable may be located outside the compartment body 10.

In this embodiment, the cooperation between the first connector 6 and each second connector 7 can enable a quick connection between the control module 30 and the energy unit 2, such that the connection between the control module 30 and the energy unit 2 is more convenient.

In some embodiments, referring to FIG. 4, the energy storage apparatus 100 includes a plurality of battery apparatuses 80, each battery apparatus 80 includes a thermal management component 82 and a plurality of energy units 2, and the thermal management component 82 is configured to adjust the temperature of the energy unit 2. At least part of the compartment bodies 10 include a third connector 8, each compartment body 10 includes a fourth connector 9, the third connector 8 is in communication with the thermal management module 20, and the fourth connector 9 is in communication with the thermal management component 82. The third connector 8 is configured to cooperate with each fourth connector 9.

As an example, the thermal management component 82 may be in a plate shape, a tube shape, or the like, and the thermal management component 82 is internally provided with a flow channel, which may be configured to introduce a fluid to heat or cool the energy unit 2. The fluid may be a refrigerant or a coolant liquid.

When the battery apparatus 80 is a battery module, the thermal management component 82 may be the bottom plate, the top plate, or the side plate of the battery module, or may be located between adjacent energy units 2.

When the battery apparatus 80 is a battery pack, referring to FIG. 18, the thermal management component 82 may be part of the case body 81 or the thermal management component 82 may be located in the accommodating space of the case body 81, or the thermal management component 82 may be located between adjacent energy units 2.

The at least part of the compartment bodies 10 including the third connector 8 means that part of the compartment bodies 10 may include the third connector 8, and the other part of the compartment bodies 10 do not include the third connector 8; or all the compartment bodies 10 may include the third connector 8.

The third connector 8 may be in direct communication with the fourth connector 9 to achieve the cooperation between the third connector 8 and the fourth connector 9. For example, the third connector 8 is in insertion fit with each fourth connector 9. The third connector 8 may be fixed to the control compartment 12, and the fourth connector 9 may be movably disposed on the compartment body 10; or the third connector 8 may be movably disposed on the control compartment 12, and the fourth connector 9 may be fixedly disposed on the compartment body 10; or the third connector 8 and the fourth connector 9 may be movably disposed on the control compartment 12 and the compartment body 10, respectively. The third connector 8 may include a plurality of connecting parts, and the connecting parts are connected to the fourth connectors 9 in a one-to-one correspondence, to achieve communication between the third connector 8 and the plurality of fourth connectors 9.

Illustratively, the third connector 8 is disposed on, for example, the first partition member 101 and/or the third partition member 103 of the control compartment 12.

Alternatively, the third connector 8 and the fourth connector 9 may be in communication by a connecting member, and the connecting member may be a pipe. The third connector 8 and the fourth connector 9 may be fixed to the control compartment 12 and the compartment body 10, respectively; or the third connector 8 may be fixed to the control compartment 12, and the fourth connector 9 may be movably disposed on the compartment body 10; or the third connector 8 may be movably disposed on the control compartment 12, and the fourth connector 9 may be fixedly disposed on the compartment body 10; or the third connector 8 and the fourth connector 9 may be movably disposed on the control compartment 12 and the compartment body 10, respectively.

As an example, the thermal management module 20 is mounted with the third connector 8, each compartment body 10 is mounted with the fourth connector 9, and the third connector 8 and the fourth connector 9 are in communication via a pipeline. The pipeline may be a quick-connect pipeline, and both ends of the pipeline are provided with quick-connect connectors. The first connector 6 and the second connector 7 are also quick-connect connectors, respectively, and the two quick-connect connectors at both ends of the pipeline are connected to the first connector 6 and the second connector 7, respectively.

In this embodiment, the cooperation between the third connector 8 and the fourth connector 9 can enable quick communication between the thermal management component 82 and the thermal management module 20, thereby facilitating the mounting of the thermal management module 20.

In some embodiments, the thermal management module 20 is in communication with a plurality of thermal management components 82 via a liquid cooling pipeline 90, the liquid cooling pipeline 90 includes a main pipeline 91 and a plurality of branch pipelines 92, the plurality of branch pipelines 92 are connected in parallel to the main pipeline 91, the main pipeline 91 is in communication with the thermal management module 20, and the plurality of branch pipelines 92 are in communication with the plurality of thermal management components 82, respectively; the main pipeline 91 is located above the plurality of battery apparatuses 80, or the main pipeline 91 is located below the plurality of battery apparatuses 80.

In an embodiment where the main pipeline 91 is located above the plurality of battery apparatuses 80, it facilitates the liquid cooling medium to flow from top to bottom to the plurality of branch pipelines 92 via the main pipeline 91, so as to cool the battery apparatuses 80.

In an embodiment where the main pipeline 91 is located below the plurality of battery apparatuses 80, it facilitates the liquid cooling medium to flow from bottom to top to the plurality of branch pipelines 92 via the main pipeline 91, so as to cool the battery apparatuses 80.

Illustratively, the energy storage apparatus 100 includes two compartment bodies 10, the two compartment bodies 10 each accommodate the energy unit 2, and the main pipelines 91 are located above the two compartment bodies 10; or the main pipeline 91 is located below the two compartment bodies 10; or one main pipeline 91 is located above one compartment body 10, and the other main pipeline 91 is located below the other compartment body 10.

Here, the main pipeline 91 is disposed above the plurality of battery apparatuses 80, or disposed below the plurality of battery apparatuses 80, which helps shorten the liquid cooling pipeline 90, thereby helping reduce the cost and improve cooling efficiency.

In some embodiments, the energy unit 2 is a battery cell, and the weight of a single energy unit 2 is 5 kg to 60 kg.

The weight of the single energy unit 2 may be any one point value of 5 kg, 10 kg, 15 kg, 20 kg, 25 kg, 30 kg, 35 kg, 40 kg, 45 kg, 50 kg, 55 kg, and 60 kg, or a point value between any two of the point values. As an example, the mass of the single energy unit 2 is 30 kg.

The weight of the energy unit 2 is appropriate, such that an appropriate number of the energy units 2 can be placed in the compartment body 10, and the energy density is moderate in the case of meeting transportation requirements.

In some embodiments, the energy storage apparatus 100 includes an energy storage compartment 100a, the energy storage compartment 100a includes one compartment body 10 and a component disposed in the compartment body 10, the weight of the energy storage compartment 100a is M, and the total weight of the energy units 2 in the compartment body 10 is M1, where (M1/M) × 100% ≥ 60%.

Illustratively, (M1/M) × 100% may be 60%, 61%, 62%, 63%, 64%, 65%, 66%, 67%, 68%, 69%, 70%, 71%, 72%, 73%, 74%, 75%, 76%, 77%, 78%, 79%, 80%, 90%, or the like.

In this way, in one aspect, the weight proportion of the energy units 2 per unit volume of the compartment body 10 can be increased, and the electric capacity per unit volume of the energy storage apparatus 100 can be increased. In another aspect, during transportation of the energy storage apparatus 100, the primary components transported are the energy units 2 that contribute to the energy storage capacity and cannot be produced at the destination due to high production difficulty, while other structures can be produced at a place close to the destination to eliminate or reduce the need for transportation, which helps reduce the transportation cost of the assembled energy storage apparatus 100 after the compartment bodies 10 are assembled into the energy storage apparatus 100.

In some embodiments, (M1/M) × 100% ≥ 80%.

Illustratively, (M1/M) × 100% may be 80%, 81%, 82%, 83%, 84%, 85%, 86%, 87%, 88%, 89%, 90%, or the like.

In this way, this further helps reduce the transportation cost of the assembled energy storage apparatus 100.

In some embodiments, the energy storage apparatus 100 includes an energy storage compartment 100a, the energy storage compartment 100a includes one compartment body 10 and a component disposed in the compartment body 10, the weight of the energy storage compartment 100a is M, the compartment body 10 is provided with a plurality of battery apparatuses 80 therein, the battery apparatus 80 includes a case 81 and a plurality of energy units 2, the plurality of energy units 2 are accommodated in the case 81, and the total weight of the battery apparatuses 80 is M2, where 70% ≤ (M2/M) × 100% ≤ 90%.

(M2/M) × 100% may be any one point value of 70%, 71%, 72%, 73%, 74%, 75%, 76%, 77%, 78%, 79%, 80%, 81%, 82%, 83%, 84%, 85%, 86%, 87%, 88%, 89%, and 90%, or a point value between any two of the point values.

When (M2/M) × 100% ≥ 70%, the weight proportion of the energy units 2 per unit volume of the compartment body 10 can be increased, and the energy density of the compartment body 10 can be increased; when (M2/M) × 100% ≤ 90%, the structural strength of the compartment body 10 can be maintained. Therefore, when 70% ≤ (M2/M) × 100% ≤ 90%, both the energy density of the energy storage compartment 100a and the structural strength of the compartment body 10 can be considered, and the compartment body 10 is more practical.

In some embodiments, the plurality of battery apparatuses 80 may be arranged in rows and columns, a plurality of battery apparatuses 80 in each row are arranged in the length direction, a plurality of battery apparatuses 80 in each column are arranged in the height direction, and each battery apparatus 80 includes a thermal management component 82 and a plurality of energy units 2. The compartment body 10 further includes a third connector 8 and a plurality of fourth connectors 9. The third connector 8 is in communication with the thermal management module 20 and each fourth connector 9, and each fourth connector 9 is in communication with the thermal management components 82 of a plurality of battery apparatuses 80 in one column.

Illustratively, the plurality of battery apparatuses 80 are arranged in, for example, 2 layers and 2 columns, 3 layers and 3 columns, 4 layers and 4 columns, or 4 layers and 3 columns.

It should be noted that the plurality of battery apparatuses 80 may also be in a plurality of rows, for example, 2 rows, 3 rows, 4 rows, 5 rows, or 6 rows; or may also be in a plurality of columns, for example, 2 columns, 3 columns, 4 columns, 5 columns, or 6 columns.

In some embodiments, the volume of the compartment body 10 is V, and the total volume of the energy units 2 in the compartment body 10 is V1, where (V1/V) × 100% ≥ 30%.

The energy unit 2 includes a shell, and the volume of the energy unit 2 is the volume of the shell. For example, the energy unit 2 is a square-shell energy unit 2, and the product of the length, the width, and the height of the square-shell energy unit 2 is the product of the length, the width, and the height of the shell.

In an embodiment where the energy unit 2 further includes an electrode terminal, the electrode terminal is disposed on the shell and partially protrudes from the shell, the electrode terminal is electrically connected to the electrode assembly, and the part of the electrode terminal protruding from the shell is not counted as the volume of the energy unit 2.

(V1/V) × 100% may be 30%, 31%, 32%, 33%, 34%, 35%, 36%, 37%, 38%, 39%, 40%, 41%, 42%, 43%, 44%, 45%, 46%, 47%, 48%, 49%, 50%, 55%, 60%, 65%, 70%, or the like.

In one aspect, the volume proportion of the energy units 2 per unit volume of the compartment body 10 can be increased, and the electric capacity per unit volume of the energy storage apparatus 100 can be increased. In another aspect, during transportation of the energy storage apparatus 100, the primary components transported are the energy units 2 that contribute to the energy storage capacity and cannot be produced at the destination due to high production difficulty, while other functional elements of the energy storage apparatus 100, such as a control element, can be produced at a place close to the destination to eliminate or reduce the need for transportation, which helps reduce the transportation cost of the assembled energy storage apparatus 100 after the compartment bodies 10 are assembled into the energy storage apparatus 100.

In some embodiments, (V1/V) × 100% ≥ 50%.

(V1/V) × 100% may be 50%, 51%, 52%, 53%, 54%, 55%, 56%, 57%, 58%, 59%, 60%, 61%, 62%, 63%, 64%, 65%, 66%, 67%, 68%, 69%, 70%, 75%, 80%, 85%, 90%, or the like.

This further helps reduce the transportation cost of the assembled energy storage apparatus 100.

In some embodiments, the volume of the compartment body 10 is V, the compartment body 10 is provided with a plurality of battery apparatuses 80 therein, the battery apparatus 80 includes a case 81 and a plurality of energy units 2, the plurality of energy units 2 are accommodated in the case 81, and the total volume of the battery apparatuses 80 is V2, where 50% ≤ (V2/V) × 100% ≤ 80%.

The volume of the energy unit 2 is the volume of the case 81. For example, the case 81 is of a rectangular parallelepiped structure, and the volume of the energy unit 2 is equal to the product of the length, the width, and the height of the case 81.

(V2/V) × 100% may be any one point value of 50%, 51%, 52%, 53%, 54%, 55%, 56%, 57%, 58%, 59%, 60%, 61%, 62%, 63%, 64%, 65%, 66%, 67%, 68%, 69%, 70%, 75%, and 80%, or a point value between any two of the point values.

When (V2/V) × 100% ≥ 50%, the volume proportion of the energy units 2 per unit volume of the compartment body 10 can be increased, and the energy density of the energy storage apparatus 100 can be increased; when (V2/V) × 100% ≤ 80%, the compartment body 10 is enabled to be provided with a sufficient volume of structural members to maintain the structural strength of the compartment body 10. Therefore, when 50% ≤ (V2/V) × 100% ≤ 80%, both the energy density of the energy storage apparatus 100 and the structural strength of the compartment body 10 can be considered, and the compartment body 10 is more practical.

In some embodiments, referring to FIG. 6, the energy storage apparatus 100 includes an energy storage compartment 100a, the energy storage compartment 100a includes one compartment body 10 and a component disposed in the compartment body 10, the energy of the energy storage compartment 100a is E, the dimension of the compartment body 10 in the length direction of the compartment body 10 is a, and the dimension of the compartment body 10 in the width direction of the compartment body 10 is b, where 250 KW/*m*² ≤ E/(a × b) ≤ 700 KW/*m*².

E/(a × b) may be any one point value of 250 KW/m², 300 KW/m², 350 KW/m², 400 KW/m², 450 KW/m², 460 KW/m², 470 KW/m², 480 KW/m², 485 KW/m², 490 KW/m², 495 KW/m², 500 KW/m², 510 KW/m², 550 KW/m², 600 KW/m², 650 KW/m², and 700 KW/m², or a point value between any two of the point values.

The energy E may be obtained from the nameplate of the energy storage apparatus 100.

When E/(a × b) ≥ 250 KW/m², the energy storage apparatus 100 is enabled to have a relatively high energy density, thereby improving the practicability of the energy storage apparatus 100; when E/(a × b) ≤ 700 KW/m², the risk of crushing other compartment bodies 10 due to the large mass of the compartment body 10 can be reduced, thereby facilitating the transportation of the compartment body 10. Therefore, when 250 KW/*m*² ≤ E/(a × b) ≤ 700 KW/*m*², both the energy density of the energy storage apparatus 100 and the mass setting of the compartment body 10 are considered, the practicability of the energy storage apparatus 100 is improved, and the transportation of the energy storage apparatus 100 is facilitated.

In some embodiments, 450 KW/*m*² ≤ E/(a × b) ≤ 600 KW/*m*².

E/(a × b) may be a point value of any one of 450 KW/m², 455 KW/m², 460 KW/m², 465 KW/m², 470 KW/m², 475 KW/m², 480 KW/m², 485 KW/m², 490 KW/m², 495 KW/m², 500 KW/m², 505 KW/m², 510 KW/m², 515 KW/m², 520 KW/m², 530 KW/m², 540 KW/m², *550* KW/m², and 600 KW/m², or a point value between any two of the point values.

As an example, E/(a × b) = 490 KW/*m*². This can further improve the energy density of the energy storage apparatus 100 and the mass setting of the compartment body 10, and facilitate the transportation of the energy storage apparatus 100.

In some embodiments, in the height direction of the compartment body 10, two adjacent compartment bodies 10 are connected by means of welding, snap-fit connection, locking attachment connection, or fixing members.

The fixing member may be at least one of a bolt and a nut, a pin, a screw, a rivet, or the like. Certainly, the fixing member may also include a fixing plate or the like to fixedly connect two adjacent compartment bodies 10 in the height direction.

Illustratively, two adjacent compartment bodies 10 are in locking attachment connection by a twist lock in the middle.

The two adjacent compartment bodies 10 in the height direction are connected by the fixing member, such that the two adjacent compartment bodies 10 in the height direction can be limited by the fixing member, which helps reduce the risk that the two adjacent compartment bodies 10 move with each other after stacking is completed, thereby helping improve the structural stability of the energy storage apparatus 100.

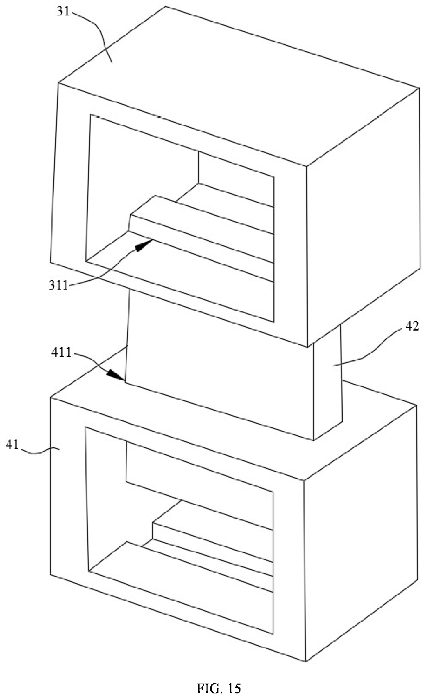

In some embodiments, referring to FIGs. 6 to 9, and 15, the plurality of compartment bodies 10 include a first compartment body 3 and a second compartment body 4, the first compartment body 3 is located above the second compartment body 4, the bottom of the first compartment body 3 is provided with a limiting pin 42, the top of the second compartment body 4 is provided with a limiting hole 411, and the limiting pin 42 is snap-fitted to the limiting hole 411.

The compartment bodies 10 includes the first compartment body 3 and the second compartment body 4, and the same compartment body 10 is the first compartment body 3 relative to the lower compartment body 10, and is the second compartment body 4 relative to the upper compartment body 10, that is, one compartment body 10 can be both the first compartment body 3 and the second compartment body 4. In other words, one compartment body 10 may be provided with the limiting pin 42 at the bottom and the limiting hole 411 at the top.

In this way, the two adjacent compartment bodies 10 in the height direction cooperate with the limiting pin 42 and the limiting hole 411, employing a simple structure to limit the relative movement of the two adjacent compartment bodies 10.

The limiting hole 411 at the top of the second compartment body 4 may be an opening for lifting the compartment body 10. In this way, during the lifting stage of the compartment body 10, the compartment body 10 is lifted through the opening, and after the lifting of the compartment body 10 is completed, the opening at the top of the compartment body 10 cooperates with the limiting pin 42 at the bottom of the adjacent upper compartment body 10 to limit the two adjacent compartment bodies 10, which helps simplify the structure of the compartment body 10.

In some embodiments, referring to FIGs. 6 to 9, and 15, the bottom of the first compartment body 3 is provided with a first limiting member 31, the first limiting member 31 is provided with a limiting groove 311, the top of the second compartment body 4 is provided with a second limiting member 41, the second limiting member 41 is provided with the limiting hole 411, and two ends of the limiting pin 42 are snap-fitted to the limiting groove 311 and the limiting hole 411, respectively.

The second limiting member 41 may be the above lifting part, and the limiting hole 411 may be the above opening. The limiting hole 411 may also be a hole formed in the first compartment body 3.

In this embodiment, in the process of stacking the compartment bodies 10 in the height direction, the limiting pin 42 cooperates with the limiting groove 311 of the upper compartment body 10 of the two adjacent compartment bodies 10 and cooperates with the limiting hole 411 of the lower compartment body 10 of the two adjacent compartment bodies 10, employing a simple structure to limit the relative movement of the two adjacent compartment bodies 10.

In this way, the manufacturing process is simplified and the cost is reduced.

The embodiments of the present disclosure provide an energy storage apparatus 100, including a first compartment body 3, a second compartment body 4, a control module 30, a thermal management module 20, and a plurality of energy units 2. The first compartment body 3 is located above the second compartment body 4, the second compartment body 4 includes a main body portion 15, the first compartment body 3 includes a main body portion 15 and a mounting portion 16 disposed above the main body portion 15, the thermal management module 20 is accommodated in the mounting portion 16, an energy compartment 11 and a control compartment 12 are provided inside the main body portion 15, the energy compartment 11 is configured to accommodate at least one energy unit 2, and at least part of control modules 30 are accommodated in the control compartment 12. The dimensions of the first compartment body 3 and the second compartment body 4 in the height direction are both greater than or equal to one half of the dimension of the standard container in the height direction, and are both less than the dimension of one standard container in the height direction. The sum of the dimensions of the first compartment body 3 and the second compartment body 4 in the height direction is greater than the sum of the dimension of one standard container in the height direction. The thermal management module 20 in the first compartment body 3 can control the temperatures of a plurality of energy units 2 in the first compartment body 3 and a plurality of energy units 2 in the second compartment body 4, the control module 30 in the first compartment body 3 can electrically control the plurality of energy units 2 in the first compartment body 3, and the control module 30 in the second compartment body 4 can electrically control the plurality of energy units 2 in the second compartment body 4. By separating the energy storage apparatus 100 into the first compartment body 3 and the second compartment body 4, all components of the energy storage apparatus 100 are accommodated in the first compartment body 3 and the second compartment body 4. In this way, by reducing the dimension of the compartment body 10, the total weight of the compartment body 10 containing the energy unit 2 and other components can be reduced, which helps alleviate the problem of overweight during transportation and reduces the transportation cost of the energy storage apparatus 100. After the first compartment body 3 and the second compartment body 4 are stacked together in the height direction, the sum of the dimensions of the first compartment body 3 and the second compartment body 4 in the height direction is greater than the dimension of one standard container in the height direction, such that the electric capacity of the energy storage apparatus 100 can be increased as much as possible on the premise of meeting the transportation weight. In another aspect, this helps increase the volume and electric capacity of the energy storage apparatus 100, thereby further reducing the usage cost of the energy storage apparatus 100. All components of the energy storage apparatus 100 are integrated inside the compartment body 10, such that the connection to the PCS and the EMS can be performed after the compartment bodies 10 are stacked on site, which helps reduce the workload of on-site assembly and improves the assembly efficiency, thereby facilitating the use by the customer. In addition, the dimension of the at least one compartment body 10 of the plurality of compartment bodies 10 in the height direction is set to be different from the dimensions of the other compartment bodies 10 in the height direction. In this way, it is convenient to improve the flexibility of the capacity of the compartment body 10 and match different requirements. In addition, other components and parts of the energy storage apparatus 100 other than the energy unit 2 can be accommodated in the compartment body 10 with a larger dimension in the height direction. In this way, the energy units 2 accommodated in different compartment bodies 10 can be substantially the same or completely the same, which is conducive to improving the assembly efficiency of the energy unit 2 and reducing the cost. In addition, this helps improve the uniformity of the electric capacity of different compartment bodies 10, thereby improving the performance of the energy storage apparatus 100.

The above are only preferred embodiments of the present disclosure and are not intended to limit the present disclosure. For those skilled in the art, the present disclosure can be modified and varied. Any modifications, equivalent substitutions, improvements, and the like made within the spirit and principle of the present disclosure all fall within the protection scope of the present disclosure.

## Claims

1. An energy storage apparatus, comprising:
a plurality of energy units;
a plurality of compartment bodies, the plurality of compartment bodies being arranged in a height direction of the energy storage apparatus, and the plurality of compartment bodies each accommodating the energy unit; and
a control module, the control module being configured to electrically control the energy units in the plurality of compartment bodies,
wherein a dimension of at least one compartment body of the plurality of compartment bodies in the height direction is different from dimensions of the other compartment bodies in the height direction.

2. The energy storage apparatus according to claim 1, wherein a dimension of each of the compartment bodies in the height direction is greater than or equal to one third of a dimension of a standard container in the height direction, and is less than the dimension of one standard container in the height direction.

3. The energy storage apparatus according to claim 1, wherein a dimension of each of the compartment bodies in the height direction is greater than or equal to one half of a dimension of a standard container in the height direction, and is less than the dimension of one standard container in the height direction.

4. The energy storage apparatus according to any one of claims 1 and 2, wherein the dimension of each of the compartment bodies in the height direction is greater than or equal to one third of the dimension of the standard container in the height direction, and is less than one half of the dimension of the standard container in the height direction.

5. The energy storage apparatus according to any one of claims 1 to 4, wherein a sum of dimensions of the plurality of compartment bodies in the height direction is greater than a sum of dimensions of one or a plurality of standard containers in the height direction.

6. The energy storage apparatus according to any one of claims 1 to 5, wherein m compartment bodies are provided, a sum of dimensions of m1 compartment bodies of the m compartment bodies in the height direction is less than a sum of dimensions of n standard containers in the height direction, and a sum of dimensions of m1+1 compartment bodies of the m compartment bodies in the height direction is greater than the sum of the dimensions of the n standard containers in the height direction, wherein m is greater than m1, m is greater than or equal to 2, and m1 is greater than or equal to n.

7. The energy storage apparatus according to claim 6, wherein m1 = 1, and n = 1; or m1 = 2, and n = 1; or m1 = 2, and n = 2.

8. The energy storage apparatus according to any one of claims 1 to 7, wherein a height dimension of each of the compartment bodies is h, wherein 850mm ≤ h < 2896mm.

9. The energy storage apparatus according to claim 8, wherein 1300mm ≤ h ≤ 2400mm.

10. The energy storage apparatus according to any one of claims 1 to 9, wherein a dimension of each of the compartment bodies in a length direction thereof is consistent with a dimension of the standard container in a length direction thereof, and a dimension of each of the compartment bodies in a width direction thereof is consistent with a dimension of the standard container in a width direction thereof.

11. The energy storage apparatus according to any one of claims 1 to 10, wherein except for a topmost compartment body, heights of the other compartment bodies are the same.

12. The energy storage apparatus according to any one of claims 1 to 11, wherein the energy storage apparatus comprises a thermal management module, m compartment bodies are provided, and the thermal management module is configured to manage temperatures of a plurality of energy units of the m compartment bodies.

13. The energy storage apparatus according to claim 12, wherein the plurality of compartment bodies comprise one first compartment body and at least one second compartment body, the first compartment body is located above the second compartment body, and the thermal management module is located in the first compartment body.

14. The energy storage apparatus according to claim 13, wherein a height of the first compartment body is greater than a height of the second compartment body.

15. The energy storage apparatus according to claim 13 or 14, wherein the thermal management module comprises a fan and a condenser, the fan and the condenser are located at a top of the first compartment body, a vent is formed in a top wall and/or a side wall of the first compartment body, and the vent is configured for ventilation of the thermal management module.

16. The energy storage apparatus according to claims 1 to 12, wherein the plurality of compartment bodies comprise one first compartment body and at least one second compartment body, and the first compartment body is located above the second compartment body; the control module comprises a general control module, and the general control module is located in the second compartment body.

17. The energy storage apparatus according to claim 16, wherein the control module comprises two master control modules, the two master control modules are located in the first compartment body and the second compartment body, respectively, the two master control modules are configured to control input or output of electric energy of the energy units in the first compartment body and the second compartment body, respectively, and the two master control modules are both electrically connected to the general control module.

18. The energy storage apparatus according to claim 16 or 17, wherein the control module comprises a fire protection control module, and the fire protection control module is located in the first compartment body or the second compartment body and configured for fire protection of the energy units in the first compartment body and the second compartment body.

19. The energy storage apparatus according to any one of claims 1 to 12, wherein the energy storage apparatus comprises a power conversion system, the power conversion system is accommodated in the first compartment body or the second compartment body, and the power conversion system is electrically connected to the energy units in the first compartment body and the second compartment body.

20. The energy storage apparatus according to any one of claims 1 to 12, wherein at least part of the compartment bodies comprise a first connector, the first connector being electrically connected to the control module; each of the compartment bodies comprises a second connector, the second connector being electrically connected to the plurality of energy units, wherein the first connector is configured to cooperate with each of the second connectors.

21. The energy storage apparatus according to any one of claims 12 to 15, wherein the energy storage apparatus comprises a plurality of battery apparatuses, each of the battery apparatuses comprises a thermal management component and a plurality of energy units, and the thermal management component is configured to adjust a temperature of the energy unit;
at least part of the compartment bodies comprise a third connector, and each of the compartment bodies comprises a fourth connector, wherein the third connector is in communication with the thermal management module, the fourth connector is in communication with the thermal management component, and the third connector is configured to cooperate with each of the fourth connectors.

22. The energy storage apparatus according to claim 21, wherein the thermal management module is in communication with a plurality of thermal management components through a liquid cooling pipeline, the liquid cooling pipeline comprises a main pipeline and a plurality of branch pipelines, the plurality of branch pipelines are connected in parallel to the main pipeline, the main pipeline is in communication with the thermal management module, and the plurality of branch pipelines are in communication with the plurality of thermal management components, respectively; the main pipeline is located above the plurality of battery apparatuses, or the main pipeline is located below the plurality of battery apparatuses.

23. The energy storage apparatus according to any one of claims 1 to 22, wherein the energy unit is a battery cell, and a weight of a single energy unit is 5 kg to 60 kg.

24. The energy storage apparatus according to any one of claims 1 to 23, wherein the energy storage apparatus comprises an energy storage compartment, the energy storage compartment comprises one compartment body and a component disposed in the compartment body, and a weight of the energy storage compartment is M, M being less than or equal to 35 tons.

25. The energy storage apparatus according to any one of claims 1 to 24, wherein the energy storage apparatus comprises an energy storage compartment, the energy storage compartment comprises one compartment body and a component disposed in the compartment body, a weight of the energy storage compartment is M, and a total weight of the energy units in the compartment body is M1, wherein (M1/M) × 100% ≥ 60%.

26. The energy storage apparatus according to claim 25, wherein (M1/M) × 100% ≥ 80%.

27. The energy storage apparatus according to any one of claims 1 to 26, wherein the energy storage apparatus comprises an energy storage compartment, the energy storage compartment comprises one compartment body and a component disposed in the compartment body, a weight of the energy storage compartment is M, the compartment body is provided with a plurality of battery apparatuses therein, the battery apparatus comprises a case and a plurality of energy units, the plurality of energy units are accommodated in the case, and a total weight of the battery apparatuses is M2, wherein 70% ≤ (M2/M) × 100% ≤ 90%.

28. The energy storage apparatus according to any one of claims 1 to 27, wherein a volume of the compartment body is V, and a total volume of the energy units in the compartment body is V1, wherein (V1/V) × 100% ≥ 30%.

29. The energy storage apparatus according to claim 28, wherein (V1/V) × 100% ≥ 50%.

30. The energy storage apparatus according to any one of claims 1 to 29, wherein a volume of the compartment body is V, the compartment body is provided with a plurality of battery apparatuses therein, the battery apparatus comprises a case and a plurality of energy units, the plurality of energy units are accommodated in the case, and a total volume of the battery apparatuses is V2, wherein 50% ≤ (V2/V) × 100% ≤ 80%.

31. The energy storage apparatus according to any one of claims 1 to 30, wherein the energy storage apparatus comprises an energy storage compartment, the energy storage compartment comprises one compartment body and a component disposed in the compartment body, energy of the energy storage compartment is E, a dimension of the compartment body in a length direction of the compartment body is a, and a dimension of the compartment body in a width direction of the compartment body is b, wherein 250 KW/*m*² ≤ E/(a × b) ≤ 700 KW/*m*².

32. The energy storage apparatus according to claim 31, wherein 450 KW/*m*² ≤ E/(a × b) ≤ 600 KW/*m*².

33. The energy storage apparatus according to any one of claims 1 to 32, wherein in a height direction of the compartment body, two adjacent compartment bodies are connected by means of welding, snap-fit connection, locking attachment connection, or fixing members.

34. The energy storage apparatus according to any one of claims 1 to 33, wherein the plurality of compartment bodies comprise a first compartment body and a second compartment body, the first compartment body is located above the second compartment body, a bottom of the first compartment body is provided with a limiting pin, a top of the second compartment body is provided with a limiting hole, and the limiting pin is snap-fitted to the limiting hole.

35. The energy storage apparatus according to claim 34, wherein the bottom of the first compartment body is provided with a first limiting member, the first limiting member is provided with a limiting groove, the top of the second compartment body is provided with a second limiting member, the second limiting member is provided with the limiting hole, and two ends of the limiting pin are snap-fitted to the limiting groove and the limiting hole, respectively.

36. The energy storage apparatus according to any one of claims 1 to 35, wherein m compartment bodies are provided, the energy storage apparatus further comprises a connection mechanism, and the connection mechanism is configured to be capable of connecting two adjacent compartment bodies in the height direction of the compartment body,
wherein the connection mechanism comprises a support member, and the support member is disposed between the two adjacent compartment bodies in the height direction; a sum of the sum of the dimensions of the m1 compartment bodies of the m compartment bodies in the height direction and a sum of dimensions of m1-1 support members in the height direction is less than the sum of the dimensions of the n standard containers in the height direction, and a sum of the sum of the dimensions of the m1+1 compartment bodies of the m compartment bodies in the height direction and a sum of dimensions of ml support members in the height direction is greater than the sum of the dimensions of the n standard containers in the height direction.

37. The energy storage apparatus according to any one of claims 1 to 36, wherein the standard container is a 20-foot standard container, and a height of the standard container is 2896 mm, 2591 mm, or 2438 mm.

38. The energy storage apparatus according to any one of claims 12 to 15, wherein an energy compartment and a control compartment are provided inside at least part of the compartment bodies, the energy compartment is configured to accommodate at least one energy unit, and at least part of control modules and/or at least part of thermal management modules are accommodated in the control compartment; a first compartment door is provided on at least one side of the compartment body in the width direction, and a second compartment door is provided on at least one side of the control compartment and/or a pipeline compartment in the width direction.

39. An energy storage system, comprising a power conversion apparatus and the energy storage apparatus according to any one of claims 1 to 38, wherein the power conversion apparatus is configured to electrically connect a power generation apparatus to the energy storage apparatus.

40. A charging network, comprising a charging pile and the energy storage apparatus according to any one of claims 1 to 38 or the energy storage system according to claim 39, wherein the energy storage apparatus is configured to provide electric energy to the charging pile.
